# EUROPEAN PATENT SPECIFICATION

(11) **EP 4 310 982 B1**
(45) Date of publication and mention of the grant of the patent: **10.09.2025**
(21) Application number: 22778654.8
(22) Date of filing: 22.03.2022
(51) Int. Cl.: H01M 10/42, H01M 50/204, H01M 50/258, H02J 7/00, B60L 3/00

(54) **BATTERY SYSTEM, DRIVING SYSTEM AND ENERGY STORAGE CONTAINER**
BATTERIESYSTEM, ANTRIEBSSYSTEM UND ENERGIESPEICHERBEHÄLTER
SYSTÈME DE BATTERIE, SYSTÈME D'ENTRAÎNEMENT ET RÉCIPIENT DE STOCKAGE D'ÉNERGIE

(30) Priority: 29.03.2021 CN 202110333905
(43) Date of publication of application: 24.01.2024
(73) Proprietor: Huawei Digital Power Technologies Co., Ltd., Shenzhen, Guangdong 518043 (CN)
(72) Inventor: LI, Jianshan, Shenzhen, Guangdong 518043 (CN); YU, Bo, Shenzhen, Guangdong 518043 (CN); LI, Bo, Shenzhen, Guangdong 518043 (CN)
(74) Representative: Isarpatent
(86) International application number: PCT/CN2022/082186
(87) International publication number: WO 2022/206471

(56) References cited:
- CN-A- 102 457 084
- CN-A- 107 204 638
- CN-A- 108 574 326
- CN-A- 111 591 140
- CN-A- 111 591 140
- CN-A- 113 258 146
- CN-U- 203 617 744
- JP-A- 2019 176 698
- US-A1- 2013 162 045
- US-A1- 2013 244 065

## Description

### TECHNICAL FIELD

This disclosure generally relates to the field of power electronics technologies.

The invention in particular relates to a battery system, a battery pack, and an energy storage container.

### BACKGROUND

Currently, with continuous development of battery materials, a battery pack is increasingly widely used. For example, the battery pack is used in a plurality of fields such as energy storage power stations, home energy storage, or electric vehicles.

Because a voltage of a single battery pack is limited, a battery system usually includes a plurality of battery packs, and the plurality of battery packs may be connected in series to obtain a high voltage. Each battery pack usually includes a first switch that is connected in series to the battery pack and a second switch that is connected in parallel to the battery pack. The first switch is configured to rectify a fault. The second switch is configured to bypass the corresponding battery pack. In an actual product, the first switch and the second switch each may be a metal-oxide-semiconductor field-effect transistor (MOS). A single MOS transistor may bear a limited current. Therefore, the first switch and the second switch each may be implemented through a plurality of MOS transistors that are connected in parallel. However, during an actual work process, pass-through may occur in the first switch and the second switch when a fault occurs, in other words, both the first switch and the second switch are turned on. This is equivalent to that two ends of the battery pack are directly short-circuited. A continuous short circuit or a long-time short circuit causes a permanent failure of the battery pack. In addition, the first switch and the second switch may cause an electric arc risk because of a short circuit failure. CN 203 617 744 U is an example of prior art document.

### SUMMARY

The object of the present invention is to provide a battery system, a battery pack, and an energy storage container to resolve the foregoing technical problem to avoid or eliminate a direct short circuit between a positive electrode and a negative electrode of a battery pack, and ensure safety of the battery pack. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

The invention provides a battery system, including a plurality of battery packs that are connected in series. Each battery pack corresponds to one first switch and one second switch. Each battery pack is connected in series to the corresponding first switch and then connected in parallel to the second switch. A single switching transistor may bear a limited current. Therefore, in an actual product, each of the first switch and the second switch includes a plurality of controllable switching transistors that are connected in parallel, so that each of the first switch and the second switch may bear a large current. However, the plurality of controllable switching transistors in the first switch and the second switch provided in this embodiment of this application are not simultaneously turned on, but are turned on in batches. That is, the plurality of controllable switching transistors included in the first switch correspond to at least two different turn-on moments, and the plurality of controllable switching transistors included in the second switch correspond to at least two different turn-on moments. Due to a manufacturing process problem of a switching transistor with a low on-resistance (Rdson) and a large-capacity packaging problem, the plurality of controllable switching transistors each may be independently packaged.

According to the invention, to reduce or eliminate damage to the battery pack when the first switch and the second switch are simultaneously turned on, different turn-on moments are separately set for the plurality of controllable switching transistors in the first switch and the plurality of controllable switching transistors in the second switch. When the first switch is turned on, and the second switch is also turned on because of an abnormality, because the plurality of controllable switching transistors in the second switch are not simultaneously turned on, but are successively turned on in batches, each batch of controllable switching transistors correspond to a different turn-on moment. In addition, theoretically, the first switch is already turned off, and the second switch needs to be turned on. However, when the first switch is not successfully turned off because of an abnormality, the plurality of controllable switching transistors in the second switch are turned on in batches. Because the first switch is turned on, a current of the entire battery system is large, and a controllable switching transistor that is first turned on in the second switch is turned off because of an excessively large current flowing through the controllable switching transistor, that is, the controllable switching transistor is automatically turned off. In this way, the second switch is not turned on, and a state in which the first switch and the second switch are simultaneously turned on does not exist. Therefore, the battery pack is not short-circuited for a long time. This ensures safety of the battery pack.

In a possible implementation, switching states of the controllable switching transistors in the first switch and the second switch are separately controlled by corresponding drive signals. The plurality of controllable switching transistors are turned on in batches. For example, the plurality of controllable switching transistors are turned on when the drive signals are at a high level, and are turned off when the drive signals are at a low level, that is, rising edges of the drive signals may be set asynchronous, to not simultaneously turn on the plurality of controllable switching transistors. That is, the plurality of controllable switching transistors included in the first switch correspond to at least two drive signals that have different rising edges. The plurality of controllable switching transistors included in the second switch correspond to at least two drive signals that have different rising edges.

In a possible implementation, in this embodiment of this application, the plurality of controllable switching transistors may be simultaneously turned off at a turn-off moment. For example, turn-off moments of the plurality of controllable switching transistors included in the first switch are the same, and turn-off moments of the plurality of controllable switching transistors included in the second switch are the same.

In a possible implementation, similar to that the turn-on moment corresponds to the rising edge of the drive signal, the turn-off moment corresponds to a falling edge of the drive signal. Falling edges of the drive signals may be set synchronous, to simultaneously turn off the plurality of controllable switching transistors when the drive signals are at a low level. For example, both the first switch and the second switch are turned off when the corresponding drive signals are at a low level. Falling edges of the drive signals of the plurality of controllable switching transistors included in the first switch all are the same. Falling edges of the drive signals of the plurality of controllable switching transistors included in the second switch all are the same.

In a possible implementation, a quantity of drive signals is the same as a quantity of controllable switching transistors, the drive signals are in a one-to-one correspondence with the controllable switching transistors, and the quantity of drive signals is less than or equal to a quantity of drive circuits. For example, a quantity of drive circuits corresponding to the first switch is the same as a quantity of controllable switching transistors included in the first switch, the drive circuits corresponding to the first switch are in a one-to-one correspondence with the controllable switching transistors included in the first switch, and the quantity of drive circuits corresponding to the first switch is greater than or equal to a quantity of drive signals corresponding to the first switch. A quantity of drive circuits corresponding to the second switch is the same as a quantity of controllable switching transistors included in the second switch, the drive circuits corresponding to the second switch are in a one-to-one correspondence with the controllable switching transistors included in the second switch, and the quantity of drive circuits corresponding to the second switch is greater than or equal to a quantity of drive signals corresponding to the second switch.

In a possible implementation, the quantity of drive circuits is less than the quantity of controllable switching transistors, the quantity of drive circuits is the same as the quantity of drive signals, and the drive circuits are in a one-to-one correspondence with the drive signals. For example, the plurality of controllable switching transistors included in the first switch correspond to at least two drive circuits, and the at least two drive circuits corresponding to the first switch are in a one-to-one correspondence with the at least two drive signals corresponding to the first switch. The plurality of controllable switching transistors included in the second switch correspond to at least two drive circuits, and the at least two drive circuits corresponding to the second switch are in a one-to-one correspondence with the at least two drive signals corresponding to the second switch.

In a possible implementation, both the first switch and the second switch include M controllable switching transistors that are connected in parallel. M is an integer greater than or equal to 2. A maximum quantity of controllable switching transistors driven by each drive circuit is M/2.

In a possible implementation, to better protect the battery pack, the battery system may further include: a controller. The controller is configured to: control the first switch to be turned off; control a first batch of controllable switching transistors in the plurality of controllable switching transistors in the second switch to be turned on; and when it is detected that the first batch of controllable switching transistors to be turned on are successfully turned on, control other controllable switching transistors in the second switch to be successively turned on in batches. The first switch may not be successfully turned off. Therefore, the first batch of controllable switching transistors in the second switch may not be successfully turned on. In addition, the first switch may be successfully turned off, but the first batch of controllable switching transistors in the second switch cannot be successfully turned on because of a fault.

In a possible implementation, the controller may identify, through a voltage at two ends of the first switch, whether the first switch is successfully turned off. When the first switch is successfully turned off, the voltage at the two ends of the first switch is large, that is, the voltage at the two ends of the first switch is greater than a preset voltage threshold. This indicates that the first switch is successfully turned off. In this case, the plurality of controllable switching transistors in the second switch are controlled to be turned on in batches.

In a possible implementation, the battery system further includes a current detection circuit. The current detection circuit is used to detect a current that flows through E controllable switching transistors in the first switch when the first switch is turned on. E is an integer less than or equal to M/2. The first switch includes M controllable switching transistors that are connected in parallel. M is an integer greater than or equal to 2. The controller is further configured to: when the current that flows through the E controllable switching transistors in the first switch is greater than a preset current threshold, control the first switch to be turned off. A value of E may be usually an integer less than or equal to a half of M. For example, to reduce costs, the value of E may be 1 for ease of detection. The first switch includes the plurality of controllable switching transistors that are connected in parallel. Therefore, a total current of the first switch is a sum of currents of the plurality controllable switching transistors that are connected in parallel, and a trunk current of the first switch is greater than a current of a branch in which each controllable switching transistor is located. The current of the branch in which the controllable switching transistor is located is small. The current detection circuit is easy to implement. A requirement on hardware is low. In addition, a size of a corresponding current detection circuit for detection of a small current is small. This saves a volume of the entire battery system, and saves space. Therefore, the current detection circuit provided in this embodiment of this application is easy to implement and has low costs.

In a possible implementation, the battery system further includes a fuse. The second switch is connected in series to the fuse, or each controllable switching transistor in the second switch is connected in series to the fuse. The fuse melts when a current is excessively large, to protect an MOS transistor and the battery pack. It should be understood that the first switch may also be connected in series to the fuse, or each controllable switching transistor in the first switch is connected in series to the fuse. A quantity of fuses is not limited in this embodiment of this application. Generally, to reduce costs and facilitate manufacturing, only the second switch is connected in series to the fuse, that is, one fuse is connected in series to a trunk of the second switch.

Based on the battery system provided in the foregoing embodiment, a not claimed embodiment of this application further provides a drive system for a battery pack. Advantages and effects of the foregoing battery system are also applicable to the following drive system. Details are not described herein again. The drive system is used to drive a switch in the battery pack. The battery pack corresponds to a first switch and a second switch. The battery pack is connected in series to the first switch and then connected in parallel to the second switch. The drive system includes a controller and a drive circuit. The first switch includes a plurality of controllable switching transistor that are connected in parallel. The second switch includes a plurality of controllable switching transistors that are connected in parallel. The controller is configured to control the drive circuit to drive the plurality of controllable switching transistors included in the first switch to correspond to at least two different turn-on moments, and is further configured to control the drive circuit to drive the plurality of controllable switching transistors included in the second switch to correspond to at least two different turn-on moments.

In a possible implementation, the drive circuit includes at least two first drive circuits and at least two second drive circuits. The at least two first drive circuits are used to respectively drive different controllable switching transistors in the first switch based on at least two drive signals of a first group of drive signals that are generated by the controller and that have different rising edges. The at least two second drive circuits are used to respectively drive different controllable switching transistors in the second switch based on at least two drive signals of a second group of drive signals that are generated by the controller and that have different rising edges.

In a possible implementation, falling edges of the at least two drive signals of the first group of drive signals that have different rising edges are the same. Falling edges of the at least two drive signals of the second group of drive signals that have different rising edges are the same.

In a possible implementation, a quantity of drive circuits corresponding to the first switch is the same as a quantity of controllable switching transistors included in the first switch, the drive circuits corresponding to the first switch are in a one-to-one correspondence with the controllable switching transistors included in the first switch, and the quantity of drive circuits corresponding to the first switch is greater than or equal to a quantity of drive signals corresponding to the first switch. A quantity of drive circuits corresponding to the second switch is the same as a quantity of controllable switching transistors included in the second switch, the drive circuits corresponding to the second switch are in a one-to-one correspondence with the controllable switching transistors included in the second switch, and the quantity of drive circuits corresponding to the second switch is greater than or equal to a quantity of drive signals corresponding to the second switch.

In a possible implementation, the plurality of controllable switching transistors included in the first switch correspond to at least two drive circuits, and the at least two drive circuits corresponding to the first switch are in a one-to-one correspondence with the at least two drive signals corresponding to the first switch. The plurality of controllable switching transistors included in the second switch correspond to at least two drive circuits, and the at least two drive circuits corresponding to the second switch are in a one-to-one correspondence with the at least two drive signals corresponding to the second switch.

In a possible implementation, a maximum quantity of controllable switching transistors driven by each drive circuit is M/2.

The invention further provides an energy storage container, including the battery system described above.

This invention has at least the following advantages:
In the technical solutions, to reduce or eliminate a risk that a positive electrode and a negative electrode of a battery pack are directly short-circuited because a first switch and a second switch in the battery pack are simultaneously turned on, different turn-on moments are set for a plurality of controllable switching transistors in the first switch, that is, the controllable switching transistors in the first switch are turned on in batches, but are not simultaneously turned on. Similarly, different turn-on moments are set for a plurality of controllable switching transistors in the second switch, that is, the plurality of controllable switching transistors in the second switch are also turned on in batches, but are not simultaneously turned on. For example, in a normal case, when the first switch is turned on, the second switch needs to be turned off. However, when the second switch is also turned on because of an abnormality, because the plurality of controllable switching transistors in the second switch are not simultaneously turned on, but are successively turned on in batches, each batch of controllable switching transistors that are turned on correspond to a different turn-on moment. Because the first switch is already turned on, a current of the entire battery system is large, and a batch of controllable switching transistors that are first turned on in the second switch automatically are turned off because of an excessively large current flowing through the batch of controllable switching transistors. In this way, the second switch is not successfully turned on, a state in which the first switch and the second switch are simultaneously turned on does not exist, and a positive electrode and a negative electrode of the battery pack are not short-circuited together. Therefore, the battery pack is not short-circuited for a long time. This ensures safety of the battery pack.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic diagram of a battery system according to an embodiment of this application;
FIG. 2 is a schematic diagram of an internal structure of a battery pack according to an embodiment of this application;
FIG. 3 is a schematic diagram of a battery pack according to an embodiment of this application;
FIG. 4 is a schematic diagram of another battery system according to an embodiment of this application;
FIG. 5 is a time sequence diagram of drive signals of MOS transistors in a second switch according to an embodiment of this application;
FIG. 6 is a schematic diagram of still another battery system according to an embodiment of this application;
FIG. 7 is a schematic diagram of yet another battery system according to an embodiment of this application;
FIG. 8 is a schematic diagram of still yet another battery system according to an embodiment of this application;
FIG. 9 is a schematic diagram of a further battery system according to an embodiment of this application;
FIG. 10 is a schematic diagram of an energy storage container according to an embodiment of this application;
FIG. 11 is a schematic diagram of application of an energy storage container according to an embodiment of this application; and
FIG. 12 is a schematic diagram of a connection between another energy storage container and a power grid according to an embodiment of this application.

### DESCRIPTION OF EMBODIMENTS

The following describes technical solutions in embodiments of this application with reference to accompanying drawings in embodiments of this application.

The following terms "first", "second", and the like are used only for descriptive purposes, and cannot be understood as an indication or implication of relative importance or an implicit indication of a quantity of indicated technical features. Therefore, a feature limited by "first", "second", or the like may explicitly or implicitly include one or more features. In descriptions of this application, unless otherwise stated, "a plurality of" means two or more than two.

In this application, it should be noted that a term "connection" needs to be understood in a broad sense unless otherwise expressly specified and limited. For example, the "connection" may be a fixed connection, or may be a detachable connection or an integrated connection; and may be a direct connection, or may be an indirect connection through an intermediate medium. In addition, a term "coupling" may be a manner of implementing an electrical connection for signal transmission. The "coupling" may be a direct electrical connection, or may be an indirect electrical connection through an intermediate medium.

To enable a person skilled in the art to better understand the technical solutions provided in embodiments of this application, the following first describes an architecture of a battery system.

An embodiment of this application relates to a battery system, and in particular, to a manner of controlling serially-connected switches of a battery pack and parallel-connected switches of the battery pack in the battery system. An application scenario of the battery system is not limited in this embodiment of this application. For example, the application scenario may be an energy storage power station, photovoltaic energy storage, home energy storage, or a power battery pack in an electric vehicle.

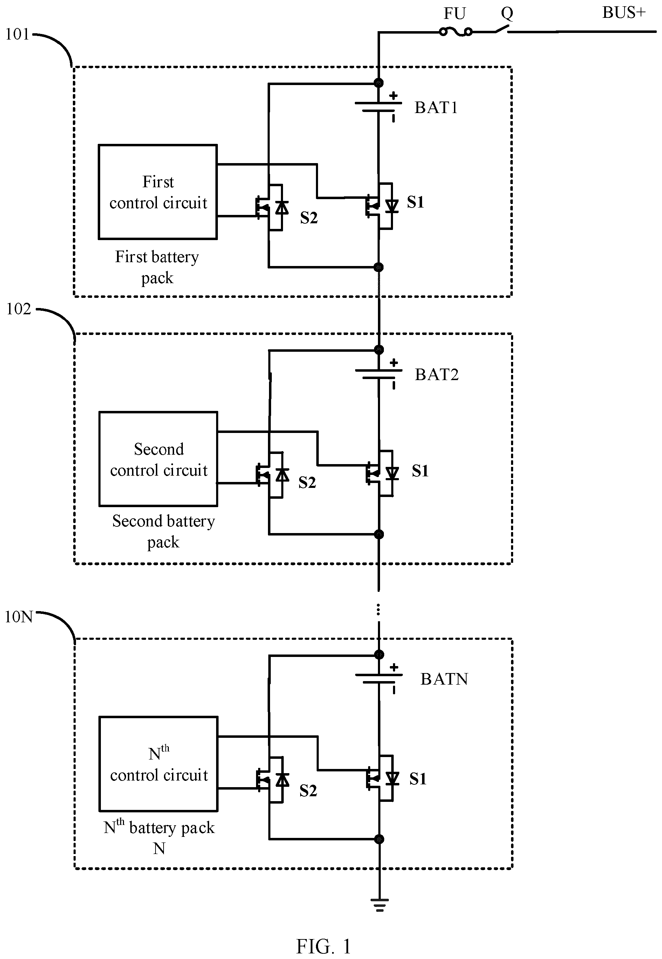

Refer to FIG. 1. FIG. 1 is a schematic diagram of a battery system according to an embodiment of this application.

The battery system provided in this embodiment of this application includes N battery packs that are connected in series. N is an integer greater than or equal to 2. The N battery packs are a first battery pack 101, a second battery pack 102 to an N^{th} battery pack 10N. A positive electrode of the first battery pack 101 is connected to a battery bus, a negative electrode of the first battery pack 101 is connected to a positive electrode of the second battery pack 102, and so on, until an (N-1)^{th} battery pack (not shown in the figure) is connected to a positive electrode of the N^{th} battery pack 10N, and a negative electrode of the N^{th} battery pack 10N is grounded.

Connection relationships and structures of the battery packs are the same. For ease of description, the following uses only the first battery pack 101 as an example. In addition to a first battery BAT1, the first battery pack further includes a first switch S1 that is connected in series to the first battery BAT1. That is, a negative electrode of the first battery BAT1 is connected to a first end of the first switch S1, and a second end of the first switch S1 is connected to a positive electrode of a second battery BAT2 in the second battery pack 102. The first battery BAT1 is connected in series to the first switch S1 and then connected in parallel to a second switch S2. That is, a first end of the second switch S2 is connected to a positive electrode of the first battery BAT1, and a second end of the second switch S2 is connected to the second end of the first switch S1.

During a normal work process, the first switch S1 in each battery pack is turned on. That is, all batteries are connected in series to form a voltage of the battery bus. When a specific battery pack is faulty, for example, the first battery BAT1 in the first battery pack 101 is faulty, the first switch S1 that is connected in series to the first battery BAT1 is turned off, to cut off a fault. To avoid affecting work of another normal battery pack, the second switch S2 that is connected in parallel to the first battery BAT1 needs to be controlled to be turned on. That is, the second switch S2 is configured to bypass the faulty first battery BAT1. In this case, the second switch S2 that is turned on may provide a current path for the normal battery pack, so that the normal battery pack is connected to the battery bus.

In addition, for safety protection, the first battery pack 101 may be connected to a positive battery bus through a fuse FU and a circuit breaker Q that are connected in series. The fuse FU may melt when a current is excessively large, to implement overcurrent protection. The circuit breaker Q may be turned off during maintenance protection, to avoid a risk of an electric shock.

In an actual product, each of the first switch S1 and the second switch S2 is usually implemented by using an MOS transistor. A single MOS transistor may bear a limited current. Therefore, one single switch, for example, the first switch S1 usually needs to be implemented by connecting a plurality of MOS transistors in parallel. Similarly, the second switch S2 also includes a plurality of MOS transistors that are connected in parallel.

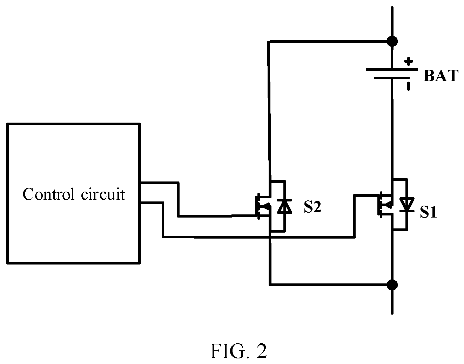

FIG. 2 is a schematic diagram of an internal structure of a battery pack according to an embodiment of this application.

As shown in FIG. 2, each battery pack in FIG. 1 may include a battery BAT, a first switch S1, and a second switch S2. The first switch S1 and the second switch S2 are both MOS transistors, and both include an anti-parallel diode.

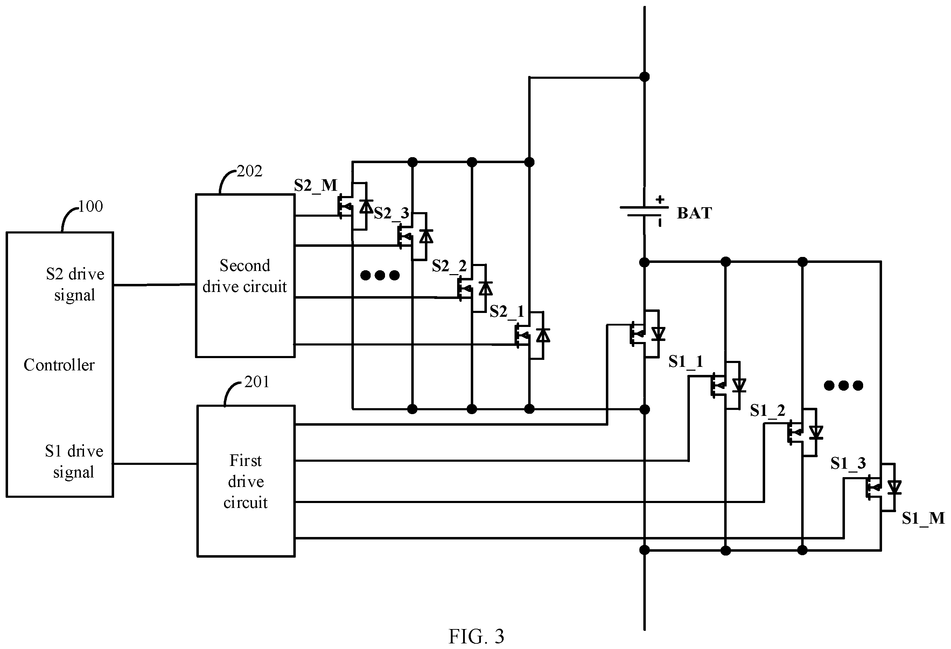

The following describes a specific implementation of each battery pack with reference to FIG. 3. FIG. 3 is a schematic diagram of a battery pack according to an embodiment of this application.

When a battery system is applied to a low-voltage and high-power scenario, especially a large-current scenario, both a first switch and a second switch usually include a plurality of controllable switching transistors that are connected in parallel, to improve a current handling capability. In a possible implementation, due to a process problem of manufacturing a switching transistor with a low on-resistance (Rdson) and a large-capacity packaging problem, a plurality of controllable switching transistors are usually separately packaged. That is, the first switch and the second switch are separately implemented by connecting a plurality of small packaged controllable switching transistors in parallel.

In FIG. 3, an example in which both the first switch S1 and the second switch S2 include M MOS transistors that are connected in parallel is used for description.

The first switch S1 in FIG. 2 includes an MOS transistor S1_1, an MOS transistor S1_2, an MOS transistor S1_3 to an MOS transistor S1_M in FIG. 3. Similarly, the second switch S2 in FIG. 2 includes an MOS transistor S2_1, an MOS transistor S2_2, an MOS transistor S2_3 to an MOS transistor S2_M in FIG. 3.

A value of M is not specifically limited in this embodiment of this application. M may be an integer greater than or equal to 2. Whether a quantity of MOS transistors included in the first switch and a quantity of MOS transistors included in the second switch are the same is not limited in this embodiment of this application. In this embodiment of this application, only an example in which both the first switch and the second switch include M MOS transistors is used for description.

In addition to a battery, the first switch, and the second switch, each battery pack further includes a drive circuit and a control circuit of the first switch and the second switch. A first drive circuit 201 is used to drive all MOS transistors in the first switch. A second drive circuit 202 is used to drive all MOS transistors in the second switch.

A controller 100 is configured to generate an S1 drive signal of the first switch and an S2 drive signal of the second switch. That is, the controller 100 sends the S1 drive signal to the first drive circuit 201, and sends the S2 drive signal to the second drive circuit 202. The first drive circuit 201 drives all the MOS transistors in the first switch based on the S1 drive signal. Similarly, the second drive circuit 202 drives all the MOS transistors in the second switch based on the S2 drive signal. That is, switching states, namely, on states and off states, of all the MOS transistors in the first switch and the second switch are controlled.

All the MOS transistors in the first switch correspond to a same S1 drive signal. Therefore, all the MOS transistors in the first switch operate simultaneously. Similarly, all the MOS transistors in the second switch correspond to a same S2 drive signal. Therefore, all the MOS transistors in the second switch operate simultaneously. For example, the M MOS transistors included in the first switch correspond to a same drive signal, that is, the M MOS transistors are simultaneously turned off, or the M MOS transistors are simultaneously turned on. For example, when the drive signal is at a high level, the MOS transistors are turned on; or when the drive signal is at a low level, the MOS transistors are turned off.

During a normal work process, the first switch is turned on or the second switch is turned on, and the first switch and the second switch are not simultaneously turned on. However, when the drive signal is faulty or the switch is faulty, the first switch and the second switch may be simultaneously turned on. For example, when the second switch is faulty or the drive signal corresponding to the second switch is abnormal, the first switch is normally turned on, and the second switch is also turned on. In this case, the first switch and the second switch that are turned on directly short-circuit a positive electrode and a negative electrode of the battery pack. The battery pack is damaged because of a long-time short circuit. In addition, when a plurality of battery packs are connected in series to form a battery cluster, the plurality of battery packs that are connected in series form a high voltage. The high voltage is applied to two ends of an MOS transistor at a moment of turning off the MOS transistor, resulting in high-voltage arcing or adhesion. It is more difficult to turn off the MOS transistor.

In this embodiment of this application, to reduce or eliminate damage to the battery pack when the first switch and the second switch are simultaneously turned on, different turn-on moments are set for a plurality of controllable switching transistors in the first switch, and different turn-on moments are set for a plurality of controllable switching transistors in the second switch. When the first switch is turned on, and the second switch also needs to be turned on because of an abnormality, because the plurality of controllable switching transistors in the second switch are not simultaneously turned on, but are successively turned on in batches, each batch of controllable switching transistors correspond to a different turn-on moment. Because the first switch is turned on, a current of the entire battery system is large, and a controllable switching transistor that is first turned on in the second switch is turned off because of an excessively large current flowing through the controllable switching transistor, that is, the controllable switching transistor is automatically turned off. In this way, the second switch is not turned on, and the first switch and the second switch are not simultaneously turned on. Therefore, the battery pack is not short-circuited for a long time. This ensures safety of the battery pack.

The following describes, with reference to the accompanying drawings, an implementation of a battery system provided in an embodiment of this application.

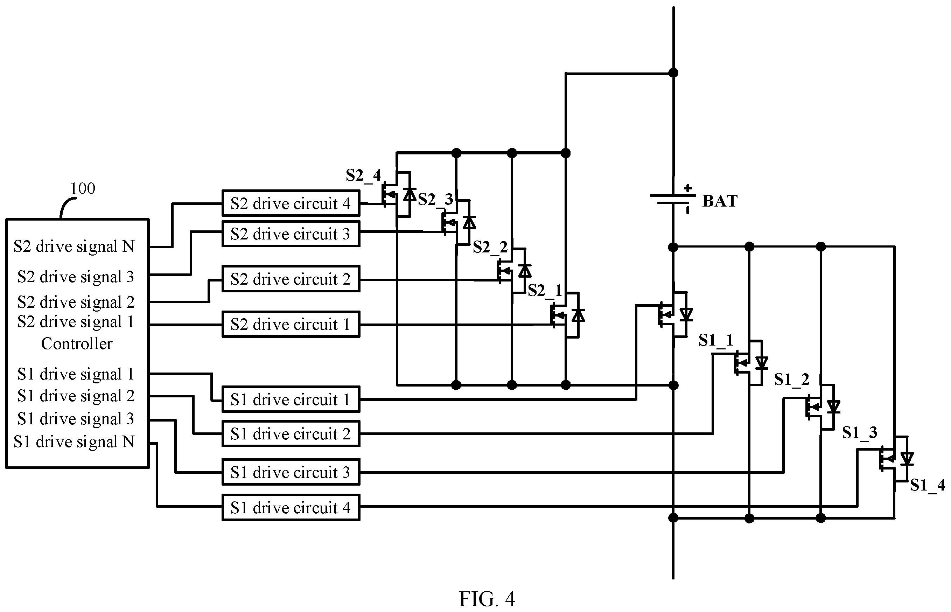

Refer to FIG. 4. FIG. 4 is a schematic diagram of another battery system according to an embodiment of this application.

The battery system provided in this embodiment of this application includes a plurality of battery packs that are connected in series. Each battery pack corresponds to one first switch that is connected in series to the battery pack. Each battery pack corresponds to one second switch that is connected in parallel to the battery pack.

Each battery pack is connected in series to the corresponding first switch and then connected in parallel to the second switch.

The first switch includes a plurality of controllable switching transistors that are connected in parallel. The second switch includes a plurality of controllable switching transistors that are connected in parallel.

In this embodiment of this application, a quantity of controllable switching transistors included in the first switch is not limited, and a quantity of controllable switching transistors included in the second switch is not limited. For example, the quantity of controllable switching transistors included in the first switch and the quantity of controllable switching transistors included in the second switch may be the same or different. In this embodiment of this application, an example in which the quantity of controllable switching transistors included in the first switch and the quantity of controllable switching transistors included in the second switch are the same is used for description. In this embodiment of this application, a type of the controllable switching transistors is also not limited. For example, the controllable switching transistors included in the first switch and the second switch may be specifically implemented by using an MOS transistor.

The plurality of controllable switching transistors included in the first switch correspond to at least two different turn-on moments. The plurality of controllable switching transistors included in the second switch correspond to at least two different turn-on moments.

Switching states of the first switch and the second switch are complementary in a normal case. That is, when the first switch is turned on, the second switch is not controlled to be turned on. When the second switch is turned on, the first switch is not controlled to be turned on. If the first switch needs to be controlled to be turned on, the second switch needs to be first controlled to be turned off. However, in an abnormal case, when the first switch is normally turned on, the second switch may also be turned on because of an abnormality. This short-circuits the battery pack. To protect the battery pack, in this embodiment of this application, the turn-on moments of the MOS transistors in the first switch and the second switch are set to be different. When a switch is abnormally turned on, one of the switches is normally turned on, the MOS transistors in the switch that is abnormally turned on are turned on in batches, and a batch of MOS transistors that are first turned on are turned off because of an excessively large current, that is, the batch of MOS transistors are not successfully turned on. In this way, a positive electrode and a negative electrode of the battery pack are not connected together, and the battery pack is not short-circuited, to protect the battery pack.

The plurality of controllable switching transistors correspond to different turn-on moments. This may be specifically implemented through different time sequences of drive signals corresponding to the controllable switching transistors. For example, for a controllable switching transistor that is turned on at a high level, moments of rising edges of the drive signals may be different. That is, the plurality of controllable switching transistors included in the first switch correspond to at least two drive signals that have different rising edges. The plurality of controllable switching transistors included in the second switch correspond to at least two drive signals that have different rising edges.

In a possible implementation, a quantity of drive signals is the same as a quantity of MOS transistors, the drive signals are in a one-to-one correspondence with the MOS transistors, and the quantity of drive signals is less than or equal to a quantity of drive circuits. That is, a quantity of drive circuits corresponding to the first switch is the same as a quantity of controllable switching transistors included in the first switch, the drive circuits corresponding to the first switch are in a one-to-one correspondence with the controllable switching transistors included in the first switch, and the quantity of drive circuits corresponding to the first switch is greater than or equal to a quantity of drive signals corresponding to the first switch. A quantity of drive circuits corresponding to the second switch is the same as a quantity of controllable switching transistors included in the second switch, the drive circuits corresponding to the second switch are in a one-to-one correspondence with the controllable switching transistors included in the second switch, and the quantity of drive circuits corresponding to the second switch is greater than or equal to a quantity of drive signals corresponding to the second switch.

In another possible implementation, a quantity of drive circuits is less than a quantity of MOS transistors, the quantity of drive circuits is the same as a quantity of drive signals, and the drive circuits are in a one-to-one correspondence with the drive signals. That is, the plurality of controllable switching transistors included in the first switch correspond to at least two drive circuits, and the at least two drive circuits corresponding to the first switch are in a one-to-one correspondence with the at least two drive signals corresponding to the first switch. The plurality of controllable switching transistors included in the second switch correspond to at least two drive circuits, and the at least two drive circuits corresponding to the second switch are in a one-to-one correspondence with the at least two drive signals corresponding to the second switch.

In yet another possible implementation, a quantity of drive circuits is less than a quantity of MOS transistors, and the quantity of drive circuits is less than a quantity of drive signals.

When the quantity of drive circuits is less than the quantity of MOS transistors, a maximum quantity of controllable switching transistors driven by each drive circuit is M/2. For example, if the first switch includes four MOS transistors, the four MOS transistors correspond to at least two drive circuits, and each drive circuit drives two MOS transistors.

The foregoing FIG. 1 describes in detail an implementation in which a plurality of battery packs are connected in series. The following uses one of the battery packs as an example to describe, with reference to FIG. 4, a specific implementation of a battery pack provided in an embodiment of this application.

For ease of description, an example in which both the first switch and the second switch include four controllable switching transistors is used for description.

The four MOS transistors that are connected in parallel in the first switch are respectively an MOS transistor S1_1, an MOS transistor S1_2, an MOS transistor S1_3, and an MOS transistor S1_4.

Similarly, the four MOS transistors that are connected in parallel in the second switch are respectively an MOS transistor S2_1, an MOS transistor S2_2, an MOS transistor S2_3, and an MOS transistor S2_4.

It should be understood that the foregoing eight MOS transistors each include an anti-parallel diode.

The battery pack is charged in addition to being used as a power supply to discharge. When the battery pack is charged, the anti-parallel diode of the MOS transistor is turned on. In this case, detection of a voltage at two ends of the first switch cannot completely identify whether the first switch is reliably turned off. Especially in a large-current scenario, whether the first switch is turned off cannot be accurately detected. In addition, when the battery pack is charged, even if all MOS transistors of the first switch fail, accurate detection cannot be performed. Because both conduction of the anti-parallel diode and short-circuit impedance of the first switch affect a conduction voltage drop of the first switch, the conduction voltage drop of the first switch is unstable. In this case, if all MOS transistors of the second switch are turned on, a positive electrode and a negative electrode of a BAT may be short-circuited. However, batch conduction provided in this embodiment of this application may avoid a risk that the battery pack is short-circuited.

Turn-on moments of the four MOS transistors in the first switch and the second switch are different. Therefore, the four MOS transistors need to correspond to at least two different drive signals. For example, the four MOS transistors may correspond to two different drive signals, or three different drive signals, or four different drive signals. For example, when the drive signal of the MOS transistor is at a high level, the MOS transistor is turned on. Correspondingly, difference of the drive signals indicates difference of rising edges of the drive signals. Therefore, the turn-on moments of the MOS transistors are different.

In FIG. 4, an example in which each MOS transistor corresponds to one drive signal and each MOS transistor corresponds to one drive circuit is used. That is, the MOS transistor, the drive circuit, and the drive signal are in a one-to-one correspondence.

The controller 100 is configured to output eight drive signals to eight drive circuits. The eight drive circuits are respectively used to drive switching states of the eight MOS transistors.

The MOS transistor S1_1 of the first switch corresponds to an S1 drive circuit 1, and the S1 drive circuit corresponds to an S1 drive signal 1. The MOS transistor S1_2 corresponds to an S1 drive circuit 2, and the S1 drive circuit 2 corresponds to an S1 drive signal 2. The MOS transistor S1_3 corresponds to an S1 drive circuit 3, and the S1 drive circuit 3 corresponds to an S1 drive signal 3. The MOS transistor S1_4 corresponds to an S1 drive circuit 4, and the S1 drive circuit 4 corresponds to an S1 drive signal 4.

The MOS transistor S2_1 of the second switch corresponds to an S2 drive circuit 1, and the S2 drive circuit corresponds to an S2 drive signal 1. The MOS transistor S2_2 corresponds to an S2 drive circuit 2, and the S2 drive circuit 2 corresponds to an S2 drive signal 2. The MOS transistor S2_3 corresponds to an S2 drive circuit 3, and the S2 drive circuit 3 corresponds to an S2 drive signal 3. The MOS transistor S2_4 corresponds to an S2 drive circuit 4, and the S2 drive circuit 4 corresponds to an S2 drive signal 4.

For example, during a normal work process, the four MOS transistors of the first switch are all turned on, and the four MOS transistors of the second switch are all turned off. However, when the drive circuits or drive signals of the four MOS transistors of the second switch are abnormal, for example, a drive signal corresponding to S2_1 is abnormal, S2_1 may be turned on. Because the four MOS transistors of the first switch are all turned on, a current passing through S2_1 is large. A single MOS transistor may bear a limited current. Therefore, S2_1 is turned off. In this way, the positive electrode and the negative electrode of the battery pack are not short-circuited together. This ensures safety of the battery pack. In addition, the drive signals corresponding to the MOS transistors are different, that is, corresponding turn-on moments are different. Therefore, a probability that the drive signals or drive circuits of all the MOS transistors of the second switch are abnormal is small, and a probability that the battery pack is short-circuited may be reduced to some extent.

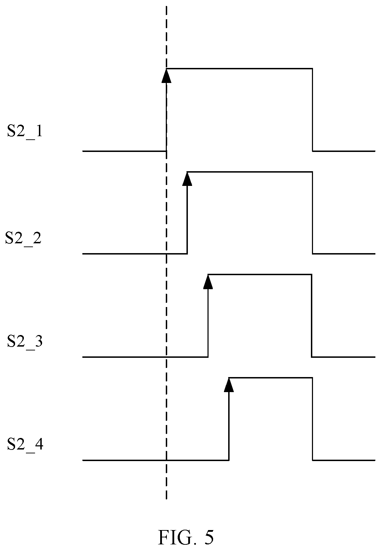

FIG. 5 is a time sequence diagram of drive signals of MOS transistors in a second switch according to an embodiment of this application.

It can be seen from FIG. 5 that drive signals of four MOS transistors included in the second switch have different rising edges, and successively lag preset time.

A drive signal of an MOS transistor S2_2 lags behind a drive signal of an MOS transistor S2_1. A drive signal of an MOS transistor S2_3 lags behind the drive signal of the MOS transistor S2_2. A drive signal of an MOS transistor S2_4 lags behind the drive signal of the MOS transistor S2_3. That is, in a normal case, the MOS transistor S2_1, the MOS transistor S2_2, the MOS transistor S2_3, and the MOS transistor S2_4 are successively controlled to be turned on.

FIG. 5 shows only a time sequence of the drive signals of the MOS transistors in the second switch. A time sequence of drive signals of MOS transistors in a first switch may also be similar.

In addition, FIG. 5 is only an example of the time sequence of the four MOS transistors, and lag time of the drive signals of the four MOS transistors may be consistent or inconsistent. In this embodiment of this application, a specific turn-on sequence of the four MOS transistors is not limited, provided that the four MOS transistors are not turned on at a same moment. FIG. 5 uses an example in which S2_1 is turned on first, and S2_2 is turned on later. For example, S2_2 may be turned on first, and S2_1 is turned on later.

In a battery system provided in this embodiment of this application, a plurality of drive signals may be used to drive a battery pack, to ensure that the MOS transistors in the first switch are turned on at different moments, and the MOS transistors in the second switch are turned on at different moments. When each MOS transistor corresponds to one drive signal, a quantity of abnormal drive signals is small, and a quantity of MOS transistors that are simultaneously turned on is small. Therefore, the battery pack may be better protected from a short circuit.

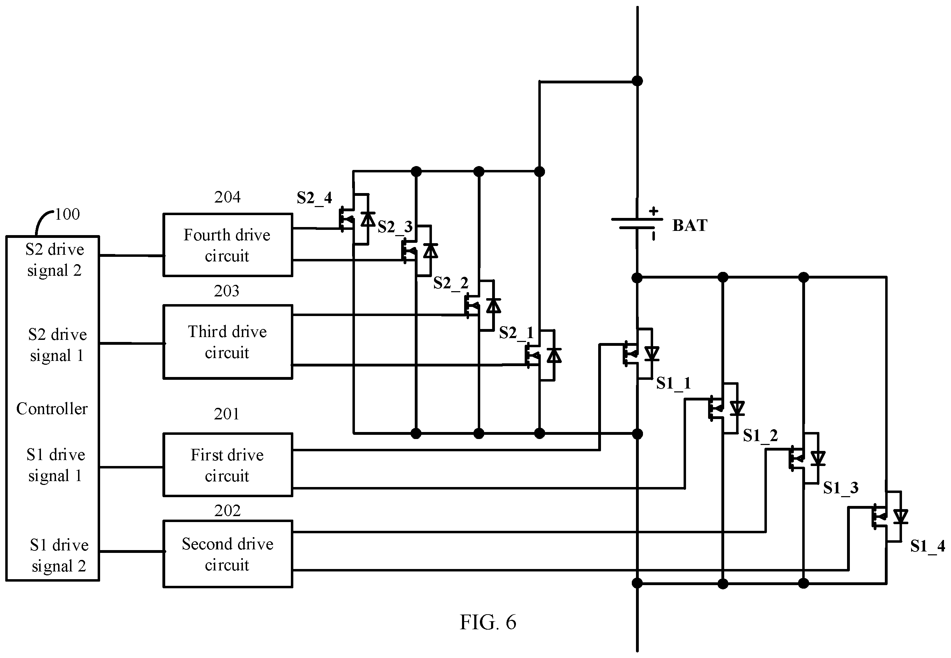

To reduce a quantity of drive signals or a quantity of drive circuits, an embodiment of this application further provides a manner of driving another battery system. The following provides a detailed description with reference to FIG. 6.

Refer to FIG. 6. FIG. 6 is a schematic diagram of still another battery system according to an embodiment of this application.

In the battery system shown in FIG. 6, a drive circuit of one battery pack includes a controller 100 and a plurality of drive circuits. The following still uses an example in which both a first switch and a second switch include four MOS transistors. For specific descriptions, refer to descriptions corresponding to FIG. 4. Details are not described herein again.

It can be seen from comparison between FIG. 4 and FIG. 6 that, in FIG. 6, two MOS transistors share a same drive circuit, and each drive circuit separately corresponds to one drive signal. That is, a quantity of drive circuits is less than a quantity of MOS transistors, and the quantity of drive circuits is the same as a quantity of drive signals.

A first drive circuit 201 is used to drive an MOS transistor S1_1 and an MOS transistor S1_2 in the first switch based on an S1 drive signal 1. A second drive circuit 202 is used to drive an MOS transistor S1_3 and an MOS transistor S1_4 in the first switch based on an S1 drive signal 2.

Similarly, a third drive circuit 203 is used to drive an MOS transistor S2_1 and an MOS transistor S2_2 in the second switch based on an S2 drive signal 1. A fourth drive circuit 204 is used to drive an MOS transistor S2_3 and an MOS transistor S2_4 in the second switch based on an S2 drive signal 2.

For example, during a normal work process, the four MOS transistors of the first switch are all turned on, and the four MOS transistors corresponding to the second switch need to be all turned off. However, when drive signals or drive circuits corresponding to the second switch are abnormal, for example, the S2 drive signal 1 is abnormal, S2_1 and S2_2 are simultaneously turned on. Because the four MOS transistors of the first switch are all turned on, when S2_1 and S2_2 are turned on, S2_1 and S2_2 are turned off and not successfully turned on because of an excessively large current. In this way, a positive electrode and a negative electrode of the battery pack are not short-circuited. This ensures safety of the battery pack.

The drive signal may be usually implemented by using a pulse width modulation (PWM, Pulse Width Modulation) signal.

It can be seen from comparison between FIG. 4 and FIG. 6 that, because the drive signals in FIG. 6 are reduced compared with the drive signals in FIG. 4, a resource of the controller 100 may be saved, and a small quantity of IO interfaces or PWM interfaces of the controller 100 is needed. In addition, the quantity of drive circuits in FIG. 6 is small, and a hardware volume is small. This reduces hardware costs. The controller 100 may be implemented by using a dedicated chip, such as a single-chip microcomputer or a microprocessor.

In this embodiment of this application, whether turn-off moments of the MOS transistors in each switch are the same is not limited. The MOS transistors may be turned off, or may not be simultaneously turned off.

In an optional implementation, a plurality of controllable switching transistors included in the first switch correspond to a same turn-off moment. That is, the plurality of controllable switching transistors are simultaneously turned off. A plurality of controllable switching transistors included in the second switch correspond to a same turn-off moment. That is, the plurality of controllable switching transistors are simultaneously turned off. During specific implementation, when the drive signals of the MOS transistors are at a low level, and the MOS transistors are turned off, the MOS transistors may be simultaneously turned off by setting falling edge moments of the drive signals corresponding to the MOS transistors to be the same. That is, the plurality of controllable switching transistors included in the first switch correspond to at least two drive signals whose falling edges are the same. The plurality of controllable switching transistors included in the second switch correspond to at least two drive signals whose falling edges are the same.

Still refer to FIG. 5, turn-off moments of the four MOS transistors included in the second switch are the same. That is, falling edge moments of the drive signals corresponding to the four MOS transistors are the same.

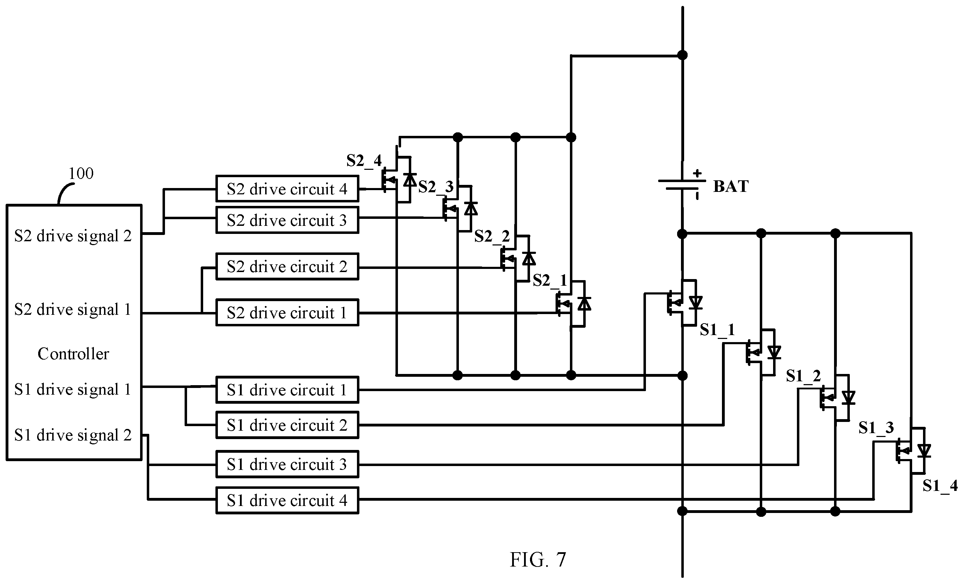

In the foregoing implementation described in FIG. 6, the drive signals are in a one-to-one correspondence with the drive circuits, and the quantity of drive circuits is less than the quantity of MOS transistors. The following describes a specific implementation with reference to FIG. 7.

Refer to FIG. 7. FIG. 7 is a schematic diagram of yet another battery system according to an embodiment of this application.

As shown in FIG. 7, an example in which a first switch includes four MOS transistors and a second switch includes four MOS transistors is still used. For a description of a specific connection relationship, refer to FIG. 4. Details are not described herein again. Only differences are described in this embodiment.

A controller 100 outputs four drive signals: an S1 drive signal 1, an S1 drive signal 2, an S2 drive signal 1, and an S2 drive signal 2. Each drive signal is simultaneously sent to two drive circuits. Each drive circuit drives one MOS transistor.

As shown in FIG. 7, the four MOS transistors of the first switch respectively correspond to an S1 drive circuit 1, an S1 drive circuit 2, an S1 drive circuit 3, and an S1 drive circuit 4. Both the S1 drive circuit 1 and the S1 drive circuit 2 are connected to the S1 drive signal 1. Both the S1 drive circuit 3 and the S1 drive circuit 4 are connected to the S1 drive signal 2. Similarly, the four MOS transistors of the second switch respectively correspond to an S2 drive circuit 1, an S2 drive circuit 2, an S2 drive circuit 3, and an S2 drive circuit 4. Both the S2 drive circuit 1 and the S2 drive circuit 2 are connected to the S2 drive signal 1. Both the S2 drive circuit 3 and the S2 drive circuit 4 are connected to the S2 drive signal 2.

Because two MOS transistors in the first switch share a same drive signal, switching time sequences of the two MOS transistors are the same, that is, the two MOS transistors are simultaneously turned on or turned off. For example, because S1_1 and S1_2 share the S1 drive signal 1, S1_1 and S1_2 are simultaneously turned on or turned off. However, the drive signals corresponding to S1_1 and S1_3 are different. S1_1 corresponds to the S1 drive signal 1, and S1_3 corresponds to the S1 drive signal 2. Therefore, S1_1 and S1_3 are successively turned on provided that rising edges of the S1 drive signal 1 and the S1 drive signal 2 are different. Similarly, S2_1 and S2_3 respectively correspond to the S2 drive signal 1 and the S2 drive signal 2. Therefore, S2_1 and S2_3 are successively turned on provided that rising edges of the S2 drive signal 1 and the S2 drive signal 2 are different.

For example, during a normal work process, battery packs in the battery system are connected in series by using the first switch, that is, the four MOS transistors of the first switch in each battery pack are all turned on. However, when the second switch in one or more battery packs is abnormal, for example, the S2 drive signal 1 is abnormal, both S2_1 and S2_2 are abnormally turned on. Because all the MOS transistors in the first switch are turned on, when S2_1 and S2_2 are turned on, both S2_1 and S2_2 are turned off because of an excessively large current flowing through S2_1 and S2_2, that is, S2_1 and S2_2 are turned off. In this way, a positive electrode and a negative electrode of a battery pack BAT are not connected together, and the battery pack BAT is not short-circuited. This ensures safety of the battery pack BAT.

It can be learned from the foregoing analysis with reference to FIG. 7 that, provided that all MOS transistors in one switch are not simultaneously turned on, but are turned on in batches, a risk that the battery pack is short-circuited is reduced. Therefore, when some MOS transistors are turned on, because a capability of bearing a current is limited, the MOS transistors are automatically turned off and not successfully turned on because of an excessively large current that the MOS transistors bear after being turned on. In this way, the battery pack is not short-circuited, to reduce a risk that the battery pack is short-circuited for a long time and fails.

The foregoing embodiments are described by using an example in which the first switch is normally turned on and the second switch is abnormally turned on. Similarly, when the second switch is normally turned on, that is, the second switch bypasses a corresponding battery pack, and the first switch is abnormally turned on, a working principle is similar.

For example, when the four MOS transistors in the second switch are all turned on, in a normal case, the four MOS transistors in the first switch need to be all turned off. However, because the drive signals of the first switch are abnormal, when S1_1 and S1_2 in the first switch are turned on, the S1_3 and S1_4 in the first switch are not turned off. In this case, all currents flowing through the first switch are applied to S1_1 and S1_2 that are turned on. Because a large current exceeds a bearing capability of S1_1 and S1_2, S1_1 and S1_2 are turned off. In this way, the positive electrode and the negative electrode of the battery pack BAT are not short-circuited together. This ensures safety of the battery pack BAT.

In addition, because any component may be faulty, to implement dual protection, and to ensure that the first switch and the second switch corresponding to the battery pack may accurately and reliably operate, the battery system provided in this embodiment of this application may further include a controller. The controller further ensures correct operations of the first switch and the second switch based on control logic. The controller in the battery system provided in this embodiment is configured to send a corresponding first drive signal to the first switch, and is further configured to send a corresponding second drive signal to the second switch. That is, the drive signals corresponding to the MOS transistors in the first switch and the second switch are all generated by the controller. That is, the control circuit in the foregoing figure may be implemented by the controller. A specific implementation of the controller is not limited in this application. For example, the controller may be a single-chip microcomputer or a microprocessor, and may directly output a PWM signal as a drive signal.

The controller is configured to: when a voltage at two ends of the first switch is abnormal, stop sending the corresponding drive signal to the first switch; and when a voltage at two ends of the second switch is abnormal, stop sending the corresponding drive signal to the second switch.

For example, when the first switch needs to be turned on, a drive signal corresponding to turn-on is sent to the first switch. However, for safety, whether the first switch is reliably turned on needs to be verified. A specific detection manner may be: When the voltage at the two ends of the first switch is less than a preset voltage threshold, it indicates that the first switch is not reliably turned on, and is still in an off state. Only when the voltage at the two ends of the first switch is greater than the preset voltage threshold, it indicates that the first switch is reliably turned off. In this case, the second switch is allowed to be controlled to be turned on.

Similarly, when the voltage at the two ends of the second switch is less than the preset voltage threshold, it indicates that the second switch is not reliably turned on, and is still in an off state. Only when the voltage at the two ends of the second switch is greater than the preset voltage threshold, it indicates that the second switch is reliably turned off. In this case, the first switch is allowed to be turned on, and the drive signal that is used to turn on the first switch is sent to the first switch.

For example, the controller is further configured to: when the voltage at the two ends of the first switch is greater than the preset voltage threshold, it indicates that the first switch is reliably turned off. In this case, a plurality of controllable switching transistors in the second switch may be controlled to be turned on in batches.

When the plurality of controllable switching transistors in the second switch are controlled to be turned on in batches, whether the plurality of controllable switching transistors in the second switch are reliably turned on may be verified. For example, after a first batch of controllable switching transistors in the second switch are controlled to be turned on, the voltage at the two ends of the second switch may be detected. When the voltage is less than a preset value, it indicates that the first batch of controllable switching transistors in the second switch are turned on, and a second batch of controllable switching transistors in the second switch are controlled to be turned on, and so on. If it is detected that the voltage at the two ends of the second switch is greater than the preset value after the first batch of controllable switching transistors in the second switch are turned on, it indicates that the first batch of controllable switching transistors in the second switch are not successfully turned on, possibly because the first switch is not successfully turned off because of a fault. Therefore, the first batch of controllable switching transistors in the second switch are turned off and cannot be successfully turned on because of a large voltage. In this case, other batches of controllable switching transistors in the second switch do not need to be successively turned on, and troubleshooting may be performed on the first switch.

In addition, in addition to the controller described above, the battery system provided in this embodiment of this application further includes a voltage detection circuit that is used to detect the voltage at the two ends of the first switch and the voltage at the two ends of the second switch. In addition, for further protection, a current detection circuit may be further included.

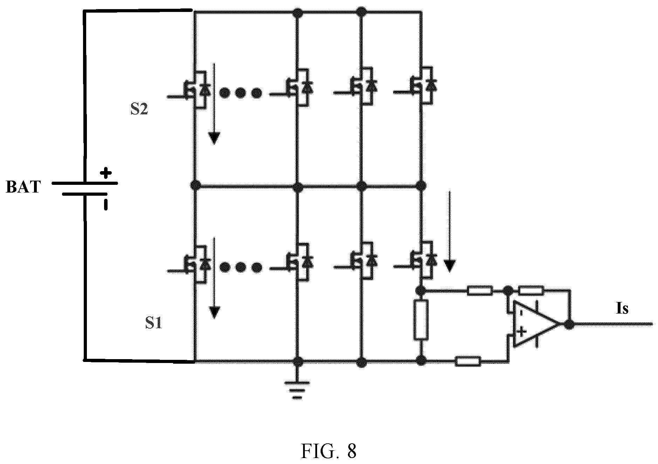

Refer to FIG. 8. FIG. 8 is a schematic diagram of still yet another battery system according to an embodiment of this application.

In another possible implementation, the battery system provided in this embodiment of this application may further include a current detection circuit. The current detection circuit obtains a current flowing through E controllable switching transistors in a first switch when the first switch is turned on. E is an integer and is less than or equal to M/2. The first switch includes M controllable switching transistors that are connected in parallel. M is an integer greater than or equal to 2. A value of E may be usually an integer less than or equal to a half of M. For example, to reduce costs, the value of E may be 1 for ease of detection. The value of E may further be a common divisor of M. For example, eight MOS transistors may be connected in parallel, to detect a current flowing through one MOS transistor, a current flowing through two MOS transistors, or a current flowing through four MOS transistors. During specific implementation, detection of the current flowing through one MOS transistor is used as an example. Because the first switch includes a plurality of MOS transistors that are connected in parallel, the current detection circuit may be used to detect a current flowing through one of the plurality of MOS transistors, to represent a value of a current of the first switch. That is, when the first switch is turned on, if a current flowing through the first switch is overcurrent, a current flowing through each MOS transistor in the first switch is overcurrent. The first switch includes the plurality of MOS transistors that are connected in parallel. Therefore, a total current of the first switch is a sum of currents of the plurality of MOS transistors that are connected in parallel, and a trunk current of the first switch is greater than a current of a branch in which each MOS transistor is located. The current of the branch in which the MOS transistor is located is small. The current detection circuit is easy to implement. A requirement on hardware is low. In addition, a size of a corresponding current detection circuit for detection of a small current is small. This saves a volume of the entire battery system, and saves space. Therefore, the current detection circuit provided in this embodiment of this application is easy to implement and has low costs.

It can be seen from FIG. 8 that, the current detection circuit includes a detection resistor. The detection resistor is connected in series to one MOS transistor. In addition, the current detection circuit further includes an operational amplifier circuit. The operational amplifier circuit amplifies a current sampled by the current detection circuit and then outputs an amplified current, that is, a detection current Is in a specific proportion relationship with a current on the MOS transistor is obtained. The detection current Is may represent a value of a current flowing through the MOS transistor, and a current flowing through one MOS transistor may represent the value of the current of the first switch. In this way, whether the first switch successfully operates is determined based on the detection current.

A controller is further configured to: when the current flowing through the first switch is greater than a preset current threshold, control the first switch to be turned off, that is, protect the first switch and a battery pack that is connected in series to the first switch, and control all MOS transistors in the first switch to be turned off.

To enable a person skilled in the art to better understand the technical solutions provided in this embodiment of this application, FIG. 8 is an equivalent schematic diagram of a single battery pack in a battery system.

When both a first switch S1 and a second switch S2 corresponding to a battery pack BAT include a plurality of MOS transistors, it is equivalent to that the battery pack BAT is a power supply, and one MOS transistor in the first switch S1 and one MOS transistor in the second switch S2 form a half-bridge circuit. When two MOS transistors on the half-bridge circuit are both turned on, a positive electrode and a negative electrode of the battery pack BAT are directly short-circuited.

In the battery system provided in this embodiment of this application, when the first switch is normally turned on, it is assumed that an internal short circuit occurs in a drive circuit of the second switch. The internal short circuit usually occurs in only one drive circuit. Therefore, an MOS transistor corresponding to a short-circuited drive circuit is turned on. Because the MOS transistors in the second switch in the battery system provided in this embodiment of this application correspond to different drive circuits, only an MOS transistor corresponding to a faulty drive circuit is turned on. Therefore, the MOS transistor may be reliably and automatically turned off within a time allowed by the battery pack, or an MOS transistor that is not faulty may be turned off through overcurrent protection provided in this embodiment of this application. This may reduce or eliminate a risk that the battery pack is short-circuited, and ensure safety of the battery pack.

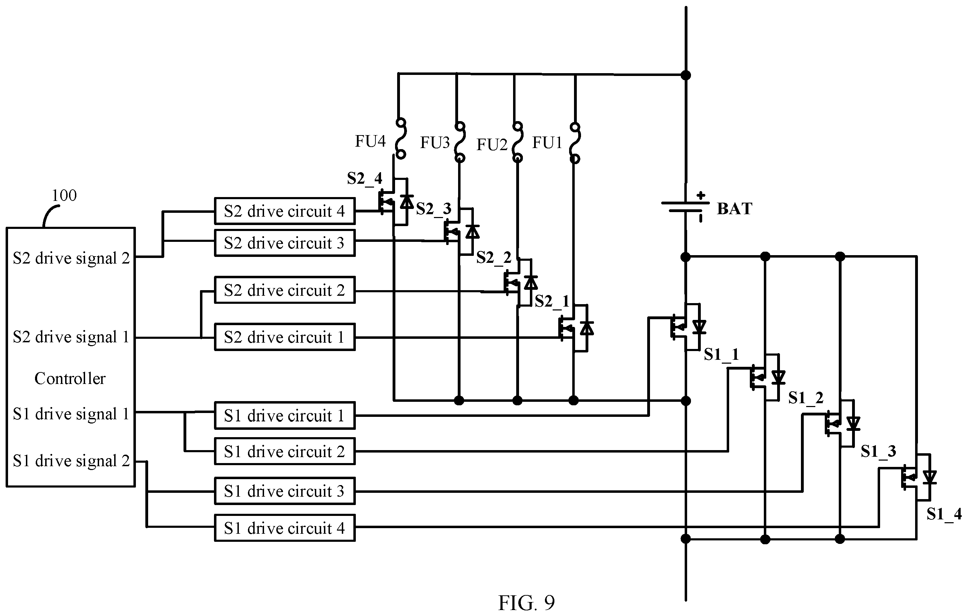

Refer to FIG. 9. FIG. 9 is a schematic diagram of a further battery system according to an embodiment of this application.

The battery system provided in this embodiment may further include a fuse.

Each controllable switching transistor in a second switch may be connected in series to the fuse.

As shown in FIG. 9, S1_1 is connected in series to a first fuse FU4, S1_2 is connected in series to a second fuse FU2, S1_3 is connected in series to a second fuse FU3, and S1_4 is connected in series to a second fuse FU4.

The fuse melts when a current is excessively large, to protect an MOS transistor and the battery pack.

It should be understood that FIG. 9 is described only by using an example in which each controllable switching transistor in the second switch is connected in series to one fuse. In addition, the second switch may include only one fuse, and after being connected in parallel, all controllable switching transistors in the second switch are connected in series to one fuse. In this way, a quantity of fuses may be reduced, and a circuit structure is simple, to facilitate production and manufacturing. In addition, FIG. 9 is described by using an example in which the second switch is connected in series to a fuse. In another implementation, a first switch may also be connected in series to a fuse. Specifically, the first switch may be connected in series to only one fuse, or each controllable switching transistor in the first switch may be connected in series to one fuse. A quantity of fuses is not specifically limited in this embodiment of this application, and may be set by a person skilled in the art based on a requirement]

Based on the battery system provided in the foregoing embodiment, an embodiment of this application further provides a drive system for a battery pack. The drive system is used to drive a switch in the battery pack. A plurality of battery packs are usually connected in series.

The drive system for the battery pack provided in this embodiment of this application is applied to driving the switch in the battery pack. The battery pack corresponds to the first switch and the second switch. The battery pack is connected in series to the first switch and then connected in parallel to the second switch. The plurality of battery packs are connected in series by using the first switch. In a normal case, all first switches are turned on, and all second switches are turned off.

The drive system includes a controller and a drive circuit.

The first switch includes a plurality of controllable switching transistors that are connected in parallel. The second switch includes a plurality of controllable switching transistors that are connected in parallel.

The controller is configured to control the drive circuit to drive the plurality of controllable switching transistors included in the first switch to correspond to at least two different turn-on moments, and is further configured to control the drive circuit to drive the plurality of controllable switching transistors included in the second switch to correspond to at least two different turn-on moments.

Generally, the controller may generate a drive signal, and the drive circuit controls an operation of each controllable switching transistor based on the drive signal. For example, the drive signal is a PWM signal, and the controllable switching transistor is an MOS transistor. When the PWM signal is at a high level, the MOS transistor is turned on. When the PWM signal is at a low level, the MOS transistor is turned off.

A quantity of drive signals generated by the controller may be the same as a quantity of drive circuits, and the drive signals may be in a one-to-one correspondence with the drive circuits. Alternatively, the quantity of drive signals may be less than the quantity of drive circuits, that is, a plurality of drive circuits share a same drive signal. In addition, the quantity of drive circuits may be the same as a quantity of controllable switching transistors, and the drive circuits may be in a one-to-one correspondence with the controllable switching transistors, that is, one drive circuit drives one MOS transistor. Alternatively, the quantity of drive circuits may be less than the quantity of controllable switching transistors, that is, one drive circuit may simultaneously drive a plurality of MOS transistors. However, only when the controllable switching transistors in the first switch correspond to at least two drive signals that have different rising edges, it can be ensured that the controllable switching transistors in the first switch are successively turned on in at least two batches. Only when the controllable switching transistors in the second switch correspond to at least two drive signals that have different rising edges, it can be ensured that the controllable switching transistors in the second switch are successively turned on in at least two batches.

In a possible implementation, the drive circuit includes at least two first drive circuits and at least two second drive circuits. The at least two first drive circuits are used to respectively drive different controllable switching transistors in the first switch based on at least two drive signals of a first group of drive signals that are generated by the controller and that have different rising edges. The at least two second drive circuits are used to respectively drive different controllable switching transistors in the second switch based on at least two drive signals of a second group of drive signals that are generated by the controller and that have different rising edges.

In a possible implementation, falling edges of the at least two drive signals of the first group of drive signals that have different rising edges are the same. Falling edges of the at least two drive signals of the second group of drive signals that have different rising edges are the same.

In a possible implementation, a quantity of drive circuits corresponding to the first switch is the same as a quantity of controllable switching transistors included in the first switch, the drive circuits corresponding to the first switch are in a one-to-one correspondence with the controllable switching transistors included in the first switch, and the quantity of drive circuits corresponding to the first switch is greater than or equal to a quantity of drive signals corresponding to the first switch. A quantity of drive circuits corresponding to the second switch is the same as a quantity of controllable switching transistors included in the second switch, the drive circuits corresponding to the second switch are in a one-to-one correspondence with the controllable switching transistors included in the second switch, and the quantity of drive circuits corresponding to the second switch is greater than or equal to a quantity of drive signals corresponding to the second switch.

In a possible implementation, the plurality of controllable switching transistors included in the first switch correspond to at least two drive circuits, and the at least two drive circuits corresponding to the first switch are in a one-to-one correspondence with the at least two drive signals corresponding to the first switch. The plurality of controllable switching transistors included in the second switch correspond to at least two drive circuits, and the at least two drive circuits corresponding to the second switch are in a one-to-one correspondence with the at least two drive signals corresponding to the second switch.

A quantity of controllable switching transistors driven by the drive circuit is not limited in this embodiment of this application. For example, the quantity of controllable switching transistors driven by the drive circuit may be one, two, three, or four. A maximum quantity of controllable switching transistors driven by each drive circuit is usually M/2. M is a total quantity of MOS transistors included in the first switch and a total quantity of MOS transistors included in the second switch.

For a specific working principle of the drive system, refer to the foregoing description in this embodiment of the battery system. Advantages corresponding to the implementations of the battery system are also applicable to the drive system. Details are not described herein again.

The following uses an example in which the battery system provided in this embodiment of this application is applied to the energy storage field for description. For example, a plurality of battery packs are connected in series to form a battery cluster, and a plurality of battery clusters are disposed in an energy storage container.

The battery cluster may be charged by using a direct current of a photovoltaic string. Electric energy output by the energy storage container may be fed back to an alternating current power grid through a converter, or may be provided for home use through a converter. For example, the electric energy output by the energy storage container provides power for a household appliance.

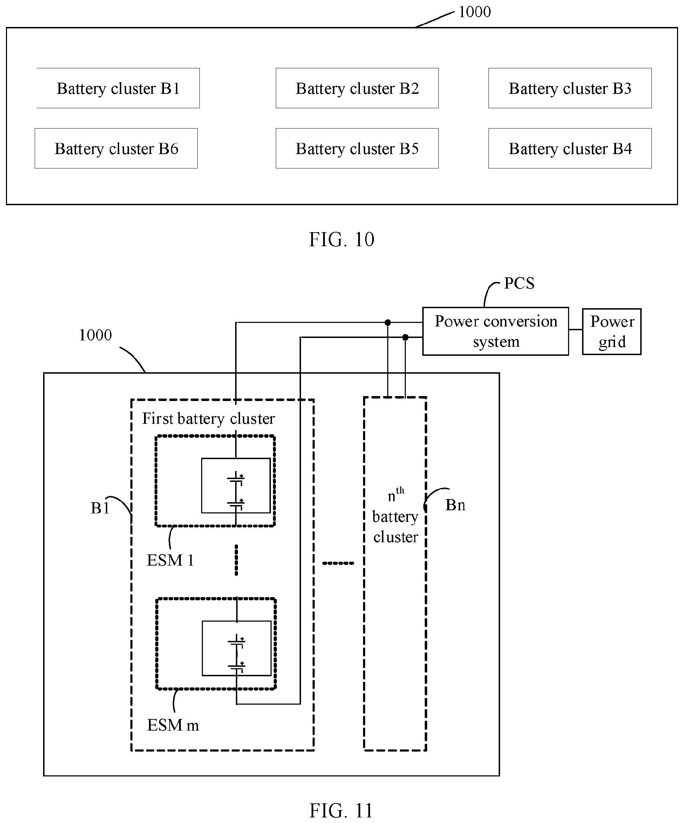

FIG. 10 is a schematic diagram of an energy storage container according to an embodiment of this application.

An embodiment of this application further provides an energy storage container, including a plurality of battery systems. For an implementation of the battery system, refer to the descriptions in the foregoing embodiments. Details are not described herein again.

The energy storage container includes a plurality of battery clusters. Each battery cluster includes a plurality of battery packs. A manner of controlling a first switch and a second switch corresponding to the battery pack may be the specific manner in the foregoing embodiment.

In this embodiment of this application, a quantity of battery clusters included in the energy storage container is not specifically limited, and a quantity of battery packs included in each battery cluster is not limited.

FIG. 10 is described by using an example in which six battery clusters are disposed in one energy storage container 1000. The six battery clusters are a battery cluster B1 to a battery cluster B6.

The battery clusters shown in FIG. 10 are disposed in two rows along a length direction of the energy storage container 1000. A first row of battery clusters includes the battery cluster B1 to a battery cluster B3 from left to right. A second row of battery clusters includes a battery cluster B4 to the battery cluster B6 from right to left. The first row of battery clusters corresponds to a first side wall in the length direction of the energy storage container 1000. The second row of battery clusters corresponds to a second side wall in the length direction of the energy storage container 1000.

Each battery cluster may include a plurality of battery packs that are connected in series. A quantity of battery packs included in each battery cluster is not limited in this embodiment of this application.

The following describes an application manner of an energy storage container in which a battery cluster is disposed in the energy storage field.

FIG. 11 is a schematic diagram of application of an energy storage container according to an embodiment of this application.

The energy storage container 1000 provided in this embodiment includes n battery clusters, for example, a first battery cluster B1 to an n^{th} battery cluster Bn. An example in which each battery cluster includes m battery modules is used. As shown in FIG. 11, the first battery cluster B1 includes a battery module ESM 1 to a battery module ESM m. The battery module ESM 1 to the battery module ESM m are connected in series. Each battery cluster is connected to an input end of a power conversion system (PCS, Power Conversion System). An output end of the PCS is connected to a power grid.

The battery cluster outputs a direct current. Therefore, if the power grid is an alternating current power grid, the PCS needs to convert the direct current into an alternating current for the power grid.

The following describes a connection between the energy storage container and the power grid with reference to the accompanying drawings.

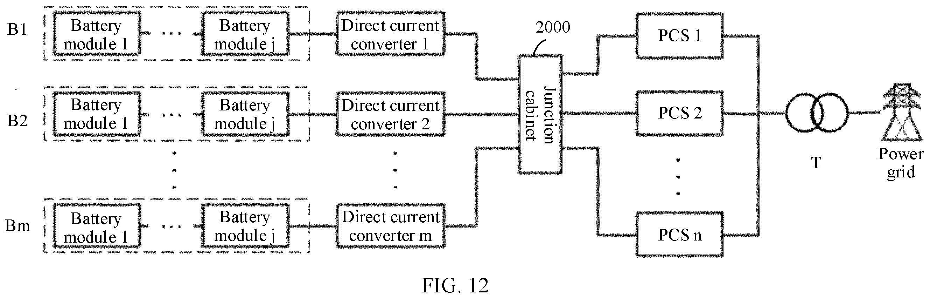

Refer to FIG. 12. FIG. 12 is a schematic diagram of a connection between another energy storage container and a power grid according to an embodiment of this application.

An output end of each battery cluster is connected to a corresponding direct current converter. For example, a first battery cluster B1 is connected to a direct current converter 1, a second battery cluster B1 is connected to a direct current converter 2, and an m^{th} battery cluster Bm is connected to a direct current converter m. Each battery cluster includes j battery modules that are a battery module 1 to a battery module j. Power of each direct current converter may be different. The power of the direct current converter may be different from power of a power conversion system. Therefore, a junction cabinet 2000 is needed for conversion. A busbar is disposed in the junction cabinet 2000. Power of a single battery cluster is limited. Therefore, output ends of a plurality of power conversion systems are usually connected in parallel and then connected to an input end of a transformer T. The PCS completes power conversion. For example, power converted by a PCS 1 to a PCS n may be the same. The output ends of the plurality of PCSs are connected in parallel and then connected to the input end of the transformer T. This may increase power. The transformer T is configured to transform an input voltage and then feed back a transformed voltage to the power grid.

It should be understood that in this application, "at least one (item)" refers to one or more and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

The protection scope of the invention is defined by the appended claims as interpreted according to Art. 69 of the EPC protocol.

## Claims

1. A battery system, comprising a plurality of battery packs (10N, 101, 102) that are connected in series, wherein each battery pack corresponds to one first switch (S1) that is connected in series to the battery pack (10N, 101, 102), and each battery pack corresponds to one second switch (S2) that is connected in parallel to the battery pack (10N, 101, 102);
each battery pack (10N, 101, 102) is connected in series to the corresponding first switch and then connected in parallel to the second switch (S2);
**characterized in that** the first switch (S1) comprises a plurality of controllable switching transistors (S1_1, S1_2, S1_3, S1_M) that are connected in parallel, and the second switch (S2) comprises a plurality of controllable switching transistors (S2_1, S2_2, S2_3, S2_M) that are connected in parallel; and
the plurality of controllable switching transistors (S1_1, S1_2, S1_3, S1_M) comprised in the first switch (S1) correspond to at least two different turn-on moments, and the plurality of controllable switching transistors (S2_1, S2_2, S2_3, S2_M) comprised in the second switch (S2) correspond to at least two different turn-on moments.

2. The battery system according to claim 1, wherein both the first switch (S1) and the second switch (S2) are configured to be turned on when corresponding drive signals are at a high level; the plurality of controllable switching transistors (S1_1, S1_2, S1_3, S1_M) comprised in the first switch (S1) correspond to at least two drive signals that have different rising edges; and the plurality of controllable switching transistors (S2_1, S2_2, S2_3, S2_M) comprised in the second switch (S2) correspond to at least two drive signals that have different rising edges.

3. The battery system according to claim 1 or 2, wherein turn-off moments of the plurality of controllable switching transistors (S1_1, S1_2, S1_3, S1_M) comprised in the first switch (S1) are the same, and turn-off moments of the plurality of controllable switching transistors (S2_1, S2_2, S2_3, S2_M) comprised in the second switch (S2) are the same.

4. The battery system according to claim 3, wherein both the first switch (S1) and the second switch (S2) are configured to be turned off when corresponding drive signals are at a low level; falling edges of drive signals of the plurality of controllable switching transistors (S1_1, S1_2, S1_3, S1_M) comprised in the first switch (S1) all are the same; and falling edges of drive signals of the plurality of controllable switching transistors (S2_1, S2_2, S2_3, S2_M) comprised in the second switch (S2) all are the same.

5. The battery system according to any one of claims 1 to 4, wherein a quantity of drive circuits (201, 202, 203, 204) corresponding to the first switch (S1) is the same as a quantity of controllable switching transistors (S1_1, S1_2, S1_3, S1_M) comprised in the first switch (S1), the drive circuits (201, 202, 203, 204) corresponding to the first switch (S1) are in a one-to-one correspondence with the controllable switching transistors (S1_1, S1_2, S1_3, S1_M) comprised in the first switch (S1), and the quantity of drive circuits (201, 202, 203, 204) corresponding to the first switch (S1) is greater than or equal to a quantity of drive signals corresponding to the first switch (S1); and
a quantity of drive circuits (201, 202, 203, 204) corresponding to the second switch (S2) is the same as a quantity of controllable switching transistors (S2_1, S2_2, S2_3, S2_M) comprised in the second switch (S2), the drive circuits (201, 202, 203, 204) corresponding to the second switch (S2) are in a one-to-one correspondence with the controllable switching transistors (S2_1, S2_2, S2_3, S2_M) comprised in the second switch (S2), and the quantity of drive circuits (201, 202, 203, 204) corresponding to the second switch (S2) is greater than or equal to a quantity of drive signals corresponding to the second switch (S2).

6. The battery system according to any one of claims 1 to 4, wherein the plurality of controllable switching transistors (S1_1, S1_2, S1_3, S1_M) comprised in the first switch (S1) correspond to at least two drive circuits (201, 202, 203, 204), and the at least two drive circuits (201, 202, 203, 204) corresponding to the first switch (S1) are in a one-to-one correspondence with the at least two drive signals corresponding to the first switch (S1); and
the plurality of controllable switching transistors (S2_1, S2_2, S2_3, S2_M) comprised in the second switch (S2) correspond to at least two drive circuits (201, 202, 203, 204), and the at least two drive circuits (201, 202, 203, 204) corresponding to the second switch (S2) are in a one-to-one correspondence with the at least two drive signals corresponding to the second switch (S2).

7. The battery system according to claim 6, wherein both the first switch (S1) and the second switch (S2) comprise M controllable switching transistors (S1_1, S1_2, S1_3, S1_M; S2_1, S2_2, S2_3, S2_M) that are connected in parallel, M is an integer greater than or equal to 2, and a maximum quantity of controllable switching transistors (S1_1, S1_2, S1_3, S1_M; S2_1, S2_2, S2_3, S2_M) driven by each drive circuit (201, 202, 203, 204) is M/2.

8. The battery system according to any one of claims 1 to 7, further comprising a controller (100), wherein
the controller (100) is configured to: control the first switch (S1) to be turned off; control a first batch of controllable switching transistors (S2_1, S2_2, S2_3, S2_M) in the plurality of controllable switching transistors (S2_1, S2_2, S2_3, S2_M) in the second switch (S2) to be turned on; and when it is detected that the first batch of controllable switching transistors (S2_1, S2_2, S2_3, S2_M) to be turned on are successfully turned on, control other controllable switching transistors (S2_1, S2_2, S2_3, S2_M) in the second switch (S2) to be successively turned on in batches.

9. The battery system according to claim 8, wherein the controller (100) is further configured to: when a voltage at two ends of the first switch (S1) is greater than a preset voltage threshold, control the plurality of controllable switching transistors (S2_1, S2_2, S2_3, S2_M) in the second switch (S2) to be turned on in batches.

10. The battery system according to claim 8 or 9, further comprising a current detection circuit, wherein
the current detection circuit is configured to detect a current that flows through E controllable switching transistors in the first switch (S1) when the first switch (S1) is turned on, wherein E is an integer less than or equal to M/2, the first switch (S1) comprises M controllable switching transistors (S1_1, S1_2, S1_3, S1_M) that are connected in parallel, and M is an integer greater than or equal to 2; and
the controller (100) is further configured to: when the current that flows through the E controllable switching transistors (S1_1, S1_2, S1_3, S1_M) is greater than a preset current threshold, control the first switch (S1) to be turned off.

11. A battery pack (10N, 101, 102), comprising a first switch (S1), a second switch (S2), a drive circuit (201, 202, 203, 204) and a control circuit of the first switch (S1) and the second switch (S2), and the battery pack is connected in series to the first switch (S1) and then connected in parallel to the second switch (S2);
**characterized in that** the first switch (S1) comprises a plurality of controllable switching transistors that are connected in parallel, and the second switch (S2) comprises a plurality of controllable switching transistors that are connected in parallel; and
the control circuit is configured to control the drive circuit (201, 202, 203, 204) to drive the plurality of controllable switching transistors comprised in the first switch (S1) to correspond to at least two different turn-on moments, and is further configured to control the drive circuit (201, 202, 203, 204) to drive the plurality of controllable switching transistors comprised in the second switch (S2) to correspond to at least two different turn-on moments.

12. The battery pack (10N, 101, 102) according to claim 11, wherein the drive circuit (201, 202, 203, 204) comprises at least two first drive circuits (201, 202, 203, 204) and at least two second drive circuits (201, 202, 203, 204);
the at least two first drive circuits (201, 202, 203, 204) are used to respectively drive different controllable switching transistors in the first switch (S1) based on at least two drive signals of a first group of drive signals that are generated by the controller (100) and that have different rising edges; and
the at least two second drive circuits (201, 202, 203, 204) are used to separately drive different controllable switching transistors in the second switch (S2) based on at least two drive signals of a second group of drive signals that are generated by the controller (100) and that have different rising edges.

13. The battery pack (10N, 101, 102) according to claim 11 or 12, wherein a quantity of drive circuits (201, 202, 203, 204) corresponding to the first switch (S1) is the same as a quantity of controllable switching transistors comprised in the first switch (S1), the drive circuits (201, 202, 203, 204) corresponding to the first switch (S1) are in a one-to-one correspondence with the controllable switching transistors comprised in the first switch (S1), and the quantity of drive circuits (201, 202, 203, 204) corresponding to the first switch (S1) is greater than or equal to a quantity of drive signals corresponding to the first switch (S1); and
a quantity of drive circuits (201, 202, 203, 204) corresponding to the second switch (S2) is the same as a quantity of controllable switching transistors comprised in the second switch (S2), the drive circuits (201, 202, 203, 204) corresponding to the second switch (S2) are in a one-to-one correspondence with the controllable switching transistors comprised in the second switch (S2), and the quantity of drive circuits (201, 202, 203, 204) corresponding to the second switch (S2) is greater than or equal to a quantity of drive signals corresponding to the second switch (S2).

14. An energy storage container (1000), comprising a plurality of battery clusters, wherein each battery cluster includes a battery system according to any one of claims 1 to 10, and each battery cluster is connected to a corresponding direct current converter.

15. The energy storage container (1000) according to claim 14, wherein each direct current converter is connected to an end of a power conversion system, PCS, and the other end of the PCS is connected to a power grid.

## Patentansprüche

1. Batteriesystem, umfassend eine Vielzahl von Batteriepaketen (10N, 101, 102), die in Reihe geschaltet sind, wobei jedes Batteriepaket einem ersten Schalter (S1) entspricht, der mit dem Batteriepaket (10N, 101, 102) in Reihe geschaltet ist, und jedes Batteriepaket einem zweiten Schalter (S2) entspricht, der mit dem Batteriepaket (10N, 101, 102) parallel geschaltet ist;
jedes der Batteriepakete (10N, 101, 102) in Reihe mit dem entsprechenden ersten Schalter geschaltet ist und danach mit dem zweiten Schalter (S2) parallel geschaltet ist;
**dadurch gekennzeichnet, dass** der erste Schalter (S1) eine Vielzahl von steuerbaren Schalttransistoren (S1_1, S1_2, S1_3, S1_M) umfasst, die parallel geschaltet sind, und der zweite Schalter (S2) eine Vielzahl von steuerbaren Schalttransistoren (S2_1, S2_2, S2_3, S2_M) umfasst, die parallel geschaltet sind; und
die Vielzahl von steuerbaren Schalttransistoren (S1_1, S1_2, S1_3, S1_M), die in dem ersten Schalter (S1) umfasst sind, mindestens zwei verschiedenen Einschaltzeitpunkten entspricht, und die Vielzahl von steuerbaren Schalttransistoren (S2_1, S2_2, S2_3, S2_M), die in dem zweiten Schalter (S2) umfasst sind, mindestens zwei verschiedenen Einschaltzeitpunkten entspricht.

2. Batteriesystem nach Anspruch 1, wobei sowohl der erste Schalter (S1) als auch der zweite Schalter (S2) dazu konfiguriert sind, eingeschaltet zu werden, wenn entsprechende Ansteuersignale einen hohen Pegel aufweisen; die Vielzahl von steuerbaren Schalttransistoren (S1_1, S1_2, S1_3, S1_M), die in dem ersten Schalter (S1) umfasst sind, mindestens zwei Ansteuersignalen entspricht, die unterschiedliche ansteigende Flanken aufweisen; und die Vielzahl von steuerbaren Schalttransistoren (S2_1, S2_2, S2_3, S2_M), die in dem zweiten Schalter (S2) umfasst sind, mindestens zwei Ansteuersignalen entspricht, die unterschiedliche ansteigende Flanken aufweisen.

3. Batteriesystem nach Anspruch 1 oder 2, wobei Ausschaltzeitpunkte der Vielzahl von steuerbaren Schalttransistoren (S1_1, S1_2, S1_3, S1_M), die in dem ersten Schalter (S1) umfasst sind, gleich sind und Ausschaltzeitpunkte der Vielzahl von steuerbaren Schalttransistoren (S2_1, S2_2, S2_3, S2_M), die in dem zweiten Schalter (S2) umfasst sind, gleich sind.

4. Batteriesystem nach Anspruch 3, wobei sowohl der erste Schalter (S1) als auch der zweite Schalter (S2) dazu konfiguriert sind, ausgeschaltet zu werden, wenn entsprechende Ansteuersignale einen niedrigen Pegel aufweisen; abfallende Flanken von Ansteuersignalen der Vielzahl von steuerbaren Schalttransistoren (S1_1, S1_2, S1_3, S1_M), die in dem ersten Schalter (S1) umfasst sind, alle gleich sind; und abfallende Flanken von Ansteuersignalen der Vielzahl von steuerbaren Schalttransistoren (S2_1, S2_2, S2_3, S2_M), die in dem zweiten Schalter (S2) umfasst sind, alle gleich sind.

5. Batteriesystem nach einem der Ansprüche 1 bis 4, wobei eine Anzahl von Ansteuerschaltungen (201, 202, 203, 204), die dem ersten Schalter (S1) entsprechen, die gleiche ist wie eine Anzahl von steuerbaren Schalttransistoren (S1_1, S1_2, S1_3, S1_M), die in dem ersten Schalter (S1) umfasst sind, die Ansteuerschaltungen (201, 202, 203, 204), die dem ersten Schalter (S1) entsprechen, in einer Eins-zu-Eins-Entsprechung mit den steuerbaren Schalttransistoren (S1_1, S1_2, S1_3, S1_M) stehen, die in dem ersten Schalter (S1) umfasst sind, und die Anzahl von Ansteuerschaltungen (201, 202, 203, 204), die dem ersten Schalter (S1) entsprechen, größer oder gleich einer Anzahl von Ansteuersignalen ist, die dem ersten Schalter (S1) entsprechen; und
eine Anzahl von Ansteuerschaltungen (201, 202, 203, 204), die dem zweiten Schalter (S2) entsprechen, die gleiche ist wie eine Anzahl von steuerbaren Schalttransistoren (S2_1, S2_2, S2_3, S2_M), die in dem zweiten Schalter (S2) umfasst sind, die Ansteuerschaltungen (201, 202, 203, 204), die dem zweiten Schalter (S2) entsprechen, in einer Eins-zu-Eins-Entsprechung mit den steuerbaren Schalttransistoren (S2_1, S2_2, S2_3, S2_M) stehen, die in dem zweiten Schalter (S2) umfasst sind, und die Anzahl von Ansteuerschaltungen (201, 202, 203, 204), die dem zweiten Schalter (S2) entsprechen, größer oder gleich einer Anzahl von Ansteuersignalen ist, die dem zweiten Schalter (S2) entsprechen.

6. Batteriesystem nach einem der Ansprüche 1 bis 4, wobei die Vielzahl von steuerbaren Schalttransistoren (S1_1, S1_2, S1_3, S1_M), die in dem ersten Schalter (S1) umfasst sind, mindestens zwei Ansteuerschaltungen (201, 202, 203, 204) entspricht, und die mindestens zwei Ansteuerschaltungen (201, 202, 203, 204), die dem ersten Schalter (S1) entsprechen, in einer Eins-zu-Eins-Entsprechung mit den mindestens zwei Ansteuersignalen stehen, die dem ersten Schalter (S1) entsprechen; und
die Vielzahl von steuerbaren Schalttransistoren (S2_1, S2_2, S2_3, S2_M), die in dem zweiten Schalter (S2) umfasst sind, mindestens zwei Ansteuerschaltungen (201, 202, 203, 204) entspricht, und die mindestens zwei Ansteuerschaltungen (201, 202, 203, 204), die dem zweiten Schalter (S2) entsprechen, in einer Eins-zu-Eins-Entsprechung mit den mindestens zwei Ansteuersignalen stehen, die dem zweiten Schalter (S2) entsprechen.

7. Batteriesystem nach Anspruch 6, wobei sowohl der erste Schalter (S1) als auch der zweite Schalter (S2) M steuerbare Schalttransistoren (S1_1, S1_2, S1_3, S1_M; S2_1, S2_2, S2_3, S2_M) umfasst, die parallel geschaltet sind, M eine Ganzzahl größer oder gleich 2 ist und eine maximale Anzahl von steuerbaren Schalttransistoren (S1_1, S1_2, S1_3, S1_M; S2_1, S2_2, S2_3, S2_M), die durch jede Ansteuerschaltung (201, 202, 203, 204) angesteuert werden, M/2 beträgt.

8. Batteriesystem nach einem der Ansprüche 1 bis 7, ferner umfassend eine Steuerung (100), wobei
die Steuerung (100) zu Folgendem konfiguriert ist: Steuern des ersten Schalters (S1) derart, dass er ausgeschaltet wird; Steuern einer ersten Gruppe von steuerbaren Schalttransistoren (S2_1, S2_2, S2_3, S2_M) in der Vielzahl von steuerbaren Schalttransistoren (S2_1, S2_2, S2_3, S2_M) in dem zweiten Schalter (S2) derart, dass sie eingeschaltet wird; und, wenn erkannt wird, dass die erste Gruppe von steuerbaren Schalttransistoren (S2_1, S2_2, S2_3, S2_M), die einzuschalten sind, erfolgreich eingeschaltet wurde, Steuern anderer steuerbarer Schalttransistoren (S2_1, S2_2, S2_3, S2_M) in dem zweiten Schalter (S2) derart, dass sie nacheinander in Gruppen eingeschaltet werden.

9. Batteriesystem nach Anspruch 8, wobei die Steuerung (100) ferner zu Folgendem konfiguriert ist: wenn eine Spannung an zwei Enden des ersten Schalters (S1) größer als ein voreingestellter Spannungsschwellenwert ist, Steuern der Vielzahl von steuerbaren Schalttransistoren (S2_1, S2_2, S2_3, S2_M) in dem zweiten Schalter (S2) derart, dass sie in Gruppen eingeschaltet wird.

10. Batteriesystem nach Anspruch 8 oder 9, ferner umfassend eine Stromerkennungsschaltung, wobei
die Stromerkennungsschaltung dazu konfiguriert ist, einen Strom zu erkennen, der durch E steuerbare Schalttransistoren in dem ersten Schalter (S1) fließt, wenn der erste Schalter (S1) eingeschaltet ist, wobei E eine Ganzzahl kleiner oder gleich M/2 ist, der erste Schalter (S1) M steuerbare Schalttransistoren (S1_1, S1_2, S1_3, S1_M) umfasst, die parallel geschaltet sind, und M eine Ganzzahl größer oder gleich 2 ist; und
die Steuerung (100) ferner zu Folgendem konfiguriert ist: wenn der Strom, der durch die E steuerbaren Schalttransistoren (S1_1, S1_2, S1_3, S1_M) fließt, größer als ein voreingestellter Stromschwellenwert ist, Steuern des ersten Schalters (S1) derart, dass er ausgeschaltet wird.

11. Batteriepaket (10N, 101, 102), umfassend einen ersten Schalter (S1), einen zweiten Schalter (S2), eine Ansteuerschaltung (201, 202, 203, 204) und eine Steuerschaltung des ersten Schalters (S1) und des zweiten Schalters (S2) und wobei das Batteriepaket in Reihe mit dem ersten Schalter (S1) geschaltet ist und dann parallel mit dem zweiten Schalter (S2) geschaltet ist;
**dadurch gekennzeichnet, dass** der erste Schalter (S1) eine Vielzahl von steuerbaren Schalttransistoren umfasst, die parallel geschaltet sind, und der zweite Schalter (S2) eine Vielzahl von steuerbaren Schalttransistoren umfasst, die parallel geschaltet sind; und
die Steuerschaltung dazu konfiguriert ist, die Ansteuerschaltung (201, 202, 203, 204) derart zu steuern, dass sie die Vielzahl von steuerbaren Schalttransistoren, die in dem ersten Schalter (S1) umfasst sind, so ansteuert, dass sie mindestens zwei verschiedenen Einschaltzeitpunkten entspricht, und ferner dazu konfiguriert ist, die Ansteuerschaltung (201, 202, 203, 204) derart zu steuern, dass sie die Vielzahl von steuerbaren Schalttransistoren, die in dem zweiten Schalter (S2) umfasst sind, so ansteuert, dass sie mindestens zwei verschiedenen Einschaltzeitpunkten entspricht.

12. Batteriepaket (10N, 101, 102) nach Anspruch 11, wobei die Ansteuerschaltung (201, 202, 203, 204) mindestens zwei erste Ansteuerschaltungen (201, 202, 203, 204) und mindestens zwei zweite Ansteuerschaltungen (201, 202, 203, 204) umfasst;
die mindestens zwei ersten Ansteuerschaltungen (201, 202, 203, 204) dazu verwendet werden, jeweils verschiedene steuerbare Schalttransistoren in dem ersten Schalter (S1) basierend auf mindestens zwei Ansteuersignalen einer ersten Gruppe von Ansteuersignalen anzusteuern, die durch die Steuerung (100) erzeugt werden und die verschiedene ansteigende Flanken aufweisen; und
die mindestens zwei zweiten Ansteuerschaltungen (201, 202, 203, 204) dazu verwendet werden, verschiedene steuerbare Schalttransistoren in dem zweiten Schalter (S2) basierend auf mindestens zwei Ansteuersignalen einer zweiten Gruppe von Ansteuersignalen separat anzusteuern, die durch die Steuerung (100) erzeugt werden und die verschiedene ansteigende Flanken aufweisen.

13. Batteriepaket (10N, 101, 102) nach Anspruch 11 oder 12, wobei eine Anzahl von Ansteuerschaltungen (201, 202, 203, 204), die dem ersten Schalter (S1) entsprechen, die gleiche ist wie eine Anzahl von steuerbaren Schalttransistoren, die in dem ersten Schalter (S1) umfasst sind, die Ansteuerschaltungen (201, 202, 203, 204), die dem ersten Schalter (S1) entsprechen, in einer Eins-zu-Eins-Entsprechung mit den steuerbaren Schalttransistoren stehen, die in dem ersten Schalter (S1) umfasst sind, und die Anzahl von Ansteuerschaltungen (201, 202, 203, 204), die dem ersten Schalter (S1) entsprechen, größer oder gleich einer Anzahl von Ansteuersignalen ist, die dem ersten Schalter (S1) entsprechen; und
eine Anzahl von Ansteuerschaltungen (201, 202, 203, 204), die dem zweiten Schalter (S2) entsprechen, die gleiche ist wie eine Anzahl von steuerbaren Schalttransistoren, die in dem zweiten Schalter (S2) umfasst sind, die Ansteuerschaltungen (201, 202, 203, 204), die dem zweiten Schalter (S2) entsprechen, in einer Eins-zu-Eins-Entsprechung mit den steuerbaren Schalttransistoren stehen, die in dem zweiten Schalter (S2) umfasst sind, und die Anzahl von Ansteuerschaltungen (201, 202, 203, 204), die dem zweiten Schalter (S2) entsprechen, größer oder gleich einer Anzahl von Ansteuersignalen ist, die dem zweiten Schalter (S2) entsprechen.

14. Energiespeicherbehälter (1000), umfassend eine Vielzahl von Batterieclustern, wobei jeder Batteriecluster ein Batteriesystem nach einem der Ansprüche 1 bis 10 beinhaltet und jeder Batteriecluster mit einem entsprechenden Gleichstromwandler verbunden ist.

15. Energiespeicherbehälter (1000) nach Anspruch 14, wobei jeder Gleichstromwandler mit einem Ende eines Energieumwandlungssystems, PCS, verbunden ist und das andere Ende des PCS mit einem Stromnetz verbunden ist.

## Revendications

1. Système de batterie, comprenant une pluralité de blocs-batteries (10N, 101, 102) qui sont connectés en série, dans lequel chaque bloc-batterie correspond à un premier commutateur (S1) qui est connecté en série au bloc-batterie (10N, 101, 102), et chaque bloc-batterie correspond à un second commutateur (S2) qui est connecté en parallèle au bloc-batterie (10N, 101, 102) ; chaque bloc-batterie (10N, 101, 102) est connecté en série au premier commutateur correspondant puis connecté en parallèle au second commutateur (S2) ;
**caractérisé en ce que** le premier commutateur (S1) comprend une pluralité de transistors de commutation commandables (S1_1, S1_2, S1_3, S1_M) qui sont connectés en parallèle, et le second commutateur (S2) comprend une pluralité de transistors de commutation commandables (S2_1, S2_2, S2_3, S2_M) qui sont connectés en parallèle ; et
la pluralité de transistors de commutation commandables (S1_1, S1_2, S1_3, S1_M) compris dans le premier commutateur (S1) correspondent à au moins deux moments de mise sous tension différents, et la pluralité de transistors de commutation commandables (S2_1, S2_2, S2_3, S2_M) compris dans le second commutateur (S2) correspondent à au moins deux moments de mise sous tension différents.

2. Système de batterie selon la revendication 1, dans lequel le premier commutateur (S1) et le second commutateur (S2) sont tous deux configurés pour être activés lorsque des signaux d'entraînement correspondants sont à un niveau élevé ; la pluralité de transistors de commutation commandables (S1_1, S1_2, S1_3, S1_M) compris dans le premier commutateur (S1) correspondent à au moins deux signaux d'entraînement ayant des fronts montants différents ; et la pluralité de transistors de commutation commandables (S2_1, S2_2, S2_3, S2_M) compris dans le second commutateur (S2) correspondent à au moins deux signaux d'entraînement ayant des fronts montants différents.

3. Système de batterie selon la revendication 1 ou 2, dans lequel les moments de désactivation de la pluralité de transistors de commutation commandables (S1_1, S1_2, S1_3, S1_M) compris dans le premier commutateur (S1) sont identiques, et les moments de désactivation de la pluralité de transistors de commutation commandables (S2_1, S2_2, S2_3, S2_M) compris dans le second commutateur (S2) sont identiques.

4. Système de batterie selon la revendication 3, dans lequel le premier commutateur (S1) et le second commutateur (S2) sont tous deux configurés pour être désactivés lorsque des signaux d'entraînement correspondants sont à un niveau bas ; des fronts descendants des signaux d'entraînement de la pluralité de transistors de commutation commandables (S1_1, S1_2, S1_3, S1_M) compris dans le premier commutateur (S1) sont tous identiques ; et des fronts descendants des signaux d'entraînement de la pluralité de transistors de commutation commandables (S2_1, S2_2, S2_3, S2_M) compris dans le second commutateur (S2) sont tous identiques.

5. Système de batterie selon l'une quelconque des revendications 1 à 4, dans lequel une quantité de circuits d'entraînement (201, 202, 203, 204) correspondant au premier commutateur (S1) est identique à une quantité de transistors de commutation commandables (S1_1, S1_2, S1_3, S1_M) compris dans le premier commutateur (S1), les circuits d'entraînement (201, 202, 203, 204) correspondant au premier commutateur (S1) sont en correspondance biunivoque avec les transistors de commutation commandables (S1_1, S1_2, S1_3, S1_M) compris dans le premier commutateur (S1), et la quantité de circuits d'entraînement (201, 202, 203, 204) correspondant au premier commutateur (S1) est supérieure ou égale à une quantité de signaux d'entraînement correspondant au premier commutateur (S1) ; et
une quantité de circuits d'entraînement (201, 202, 203, 204) correspondant au second commutateur (S2) est identique à une quantité de transistors de commutation commandables (S2_1, S2_2, S2_3, S2_M) compris dans le second commutateur (S2), les circuits d'entraînement (201, 202, 203, 204) correspondant au second commutateur (S2) sont en correspondance biunivoque avec les transistors de commutation commandables (S2_1, S2_2, S2_3, S2_M) compris dans le second commutateur (S2), et la quantité de circuits d'entraînement (201, 202, 203, 204) correspondant au second commutateur (S2) est supérieure ou égale à une quantité de signaux d'entraînement correspondant au second commutateur (S2).

6. Système de batterie selon l'une quelconque des revendications 1 à 4, dans lequel la pluralité de transistors de commutation commandables (S1_1, S1_2, S1_3, S1_M) compris dans le premier commutateur (S1) correspondent à au moins deux circuits d'entraînement (201, 202, 203, 204), et les au moins deux circuits d'entraînement (201, 202, 203, 204) correspondant au premier commutateur (S1) sont en correspondance biunivoque avec les au moins deux signaux d'entraînement correspondant au premier commutateur (S1) ; et
la pluralité de transistors de commutation commandables (S2_1, S2_2, S2_3, S2_M) compris dans le second commutateur (S2) correspondent à au moins deux circuits d'entraînement (201, 202, 203, 204), et les au moins deux circuits d'entraînement (201, 202, 203, 204) correspondant au second commutateur (S2) sont en correspondance biunivoque avec les au moins deux signaux d'entraînement correspondant au second commutateur (S2).

7. Système de batterie selon la revendication 6, dans lequel le premier commutateur (S1) et le second commutateur (S2) comprennent tous deux M transistors de commutation commandables (S1_1, S1_2, S1_3, S1_M ; S2_1, S2_2, S2_3, S2_M) connectés en parallèle, M est un entier supérieur ou égal à 2, et une quantité maximale de transistors de commutation commandables (S1_1, S1_2, S1_3, S1_M ; S2_1, S2_2, S2_3, S2_M) commandés par chaque circuit d'entraînement (201, 202, 203, 204) est M/2.

8. Système de batterie selon l'une quelconque des revendications 1 à 7, comprenant également un dispositif de commande (100), dans lequel
le dispositif de commande (100) est configuré pour : commander le premier commutateur (S1) pour qu'il soit désactivé ; commander un premier lot de transistors de commutation commandables (S2_1, S2_2, S2_3, S2_M) dans la pluralité de transistors de commutation commandables (S2_1, S2_2, S2_3, S2_M) dans le second commutateur (S2) pour qu'ils soient activés ; et lorsqu'il est détecté que le premier lot de transistors de commutation commandables (S2_1, S2_2, S2_3, S2_M) à activer est activé avec succès, commander d'autres transistors de commutation commandables (S2_1, S2_2, S2_3, S2_M) dans le second commutateur (S2) pour qu'ils soient activés successivement par lots.

9. Système de batterie selon la revendication 8, dans lequel le dispositif de commande (100) est également configuré pour : lorsqu'une tension aux deux extrémités du premier commutateur (S1) est supérieure à un seuil de tension prédéfini, commander la pluralité de transistors de commutation commandables (S2_1, S2_2, S2_3, S2_M) dans le second commutateur (S2) pour qu'ils soient activés par lots.

10. Système de batterie selon la revendication 8 ou 9, comprenant également un circuit de détection de courant, dans lequel
le circuit de détection de courant est configuré pour détecter un courant qui circule à travers E transistors de commutation commandables dans le premier commutateur (S1) lorsque le premier commutateur (S1) est activé, dans lequel E est un entier inférieur ou égal à M/2, le premier commutateur (S1) comprend M transistors de commutation commandables (S1_1, S1_2, S1_3, S1_M) qui sont connectés en parallèle, et M est un entier supérieur ou égal à 2 ; et
le dispositif de commande (100) est également configuré pour : lorsque le courant qui circule à travers les E transistors de commutation commandables (S1_1, S1_2, S1_3, S1_M) est supérieur à un seuil de courant prédéfini, commander le premier commutateur (S1) pour qu'il soit désactivé.

11. Bloc-batterie (10N, 101, 102), comprenant un premier commutateur (S1), un second commutateur (S2), un circuit d'entraînement (201, 202, 203, 204) et un circuit de commande du premier commutateur (S1) et du second commutateur (S2), et le bloc-batterie est connecté en série au premier commutateur (S1) puis connecté en parallèle au second commutateur (S2) ; **caractérisé en ce que** le premier commutateur (S1) comprend une pluralité de transistors de commutation commandables qui sont connectés en parallèle, et le second commutateur (S2) comprend une pluralité de transistors de commutation commandables qui sont connectés en parallèle ; et
le circuit de commande est configuré pour commander le circuit d'entraînement (201, 202, 203, 204) pour entraîner la pluralité de transistors de commutation commandables compris dans le premier commutateur (S1) pour correspondre à au moins deux moments de mise sous tension différents, et est également configuré pour commander le circuit d'entraînement (201, 202, 203, 204) pour entraîner la pluralité de transistors de commutation commandables compris dans le second commutateur (S2) pour correspondre à au moins deux moments de mise sous tension différents.

12. Bloc-batterie (10N, 101, 102) selon la revendication 11, dans lequel le circuit d'entraînement (201, 202, 203, 204) comprend au moins deux premiers circuits d'entraînement (201, 202, 203, 204) et au moins deux seconds circuits d'entraînement (201, 202, 203, 204) ;
les au moins deux premiers circuits d'entraînement (201, 202, 203, 204) sont utilisés pour entraîner respectivement différents transistors de commutation commandables dans le premier commutateur (S1) sur la base d'au moins deux signaux d'entraînement d'un premier groupe de signaux d'entraînement qui sont générés par le dispositif de commande (100) et qui ont des fronts montants différents ; et
les au moins deux seconds circuits d'entraînement (201, 202, 203, 204) sont utilisés pour entraîner séparément différents transistors de commutation commandables dans le second commutateur (S2) sur la base d'au moins deux signaux d'entraînement d'un second groupe de signaux d'entraînement qui sont générés par le dispositif de commande (100) et qui ont des fronts montants différents.

13. Bloc-batterie (10N, 101, 102) selon la revendication 11 ou 12, dans lequel une quantité de circuits d'entraînement (201, 202, 203, 204) correspondant au premier commutateur (S1) est identique à une quantité de transistors de commutation commandables compris dans le premier commutateur (S1), les circuits d'entraînement (201, 202, 203, 204) correspondant au premier commutateur (S1) sont en correspondance biunivoque avec les transistors de commutation commandables compris dans le premier commutateur (S1), et la quantité de circuits d'entraînement (201, 202, 203, 204) correspondant au premier commutateur (S1) est supérieure ou égale à une quantité de signaux d'entraînement correspondant au premier commutateur (S1) ; et
une quantité de circuits d'entraînement (201, 202, 203, 204) correspondant au second commutateur (S2) est identique à une quantité de transistors de commutation commandables compris dans le second commutateur (S2), les circuits d'entraînement (201, 202, 203, 204) correspondant au second commutateur (S2) sont en correspondance biunivoque avec les transistors de commutation commandables compris dans le second commutateur (S2), et la quantité de circuits d'entraînement (201, 202, 203, 204) correspondant au second commutateur (S2) est supérieure ou égale à une quantité de signaux d'entraînement correspondant au second commutateur (S2).

14. Récipient de stockage d'énergie (1000), comprenant une pluralité de groupes de batteries, dans lequel chaque groupe de batteries comporte un système de batterie selon l'une quelconque des revendications 1 à 10, et chaque groupe de batteries est connecté à un convertisseur de courant continu correspondant.

15. Récipient de stockage d'énergie (1000) selon la revendication 14, dans lequel chaque convertisseur de courant continu est connecté à une extrémité d'un système de conversion de puissance, PCS, et l'autre extrémité du PCS est connectée à un réseau électrique.
